# EUROPEAN PATENT APPLICATION

(11) **EP 4 773 553 A1**
(43) Date of publication of application: **08.07.2026**
(21) Application number: 23962578.3
(22) Date of filing: 26.12.2023
(51) Int. Cl.: H04L 12/40

(54) **NETWORKING DATA TRANSMISSION METHOD, CHIP, AND COMMUNICATION SYSTEM**

(71) Applicant: Shenzhen Goodix Technology Co., Ltd., Shenzhen, Guangdong 518045 (CN)
(72) Inventor: WANG, Jihui, Shenzhen, Guangdong 518045 (CN); LIU, Yuping, Shenzhen, Guangdong 518045 (CN); YU, Xinhua, Shenzhen, Guangdong 518045 (CN); MAO, Jian, Shenzhen, Guangdong 518045 (CN)
(74) Representative: Kraus & Lederer PartGmbB
(86) International application number: PCT/CN2023/142094
(87) International publication number: WO 2025/137884

(57) **Abstract**

The present disclosure provides a method for transmitting data in a network, a chip, and a communication system, to form more flexible network data transmission, improve the data transmission efficiency and bandwidth, and reduce the data transmission latency. The method for transmitting data in a network comprises: initiating, via a head node, transmission of a first public packet comprising first public data; receiving, via an i-th child node, the first public packet transmitted sequentially in the network, and adding first node data to the first public packet; and receiving, via an termination node, the first public packet transmitted sequentially through N child nodes in the network, wherein the first public packet comprises the first public data and the first node data, or alternatively, receiving, via the termination node after a k-th child node receives the first public packet transmitted sequentially in the network and obtains the first node data in the first public packet, the first public packet transmitted sequentially through the N child nodes in the network, wherein the first public packet comprises the first public data, wherein i is less than k in a transmission direction.

## Description

### TECHNICAL FIELD

The present disclosure relates to the technical field of electronic communication, and in particular to, a method for transmitting data in a network, a chip, and a communication system.

### BACKGROUND

Nowadays, vehicle devices and functions are evolving toward greater diversification, with various types of data being transmitted in a vehicle to support different application scenarios of a vehicle system, such as vehicle audio data. However, the vehicle audio data still needs to be transmitted relying on a simulation solution specifically by first processing the audio data via a centralized power amplifier and then transmitting the processed audio data to various audio devices via analog audio cables for playing. At present, a digital audio solution based on an Automotive Audio Bus (A2B) is also emerging. However, the A2B-based digital audio solution only supports transmission via a single serial daisy-chain, which exhibits defects such as low bandwidth, long latency, and poor reliability. Further, the A2B-based digital audio solution fails to support large-scale data transmission except for the audio data. In addition, the current mainstream solution for vehicle non-audio data transmission is based on Ethernet and Controller Area Network (CAN) bus transmission. However, with the development of intelligence, the CAN bus fails to satisfy the requirements for transmission rate and latency. At present, vehicle Ethernet uses conventional switch-based communication, which is mature and reliable, but requires a plurality of switches to connect vehicle electronic control units (ECUs), fails to support direct communication with a vehicle sensor, is costly, requires complex implementation, and fails to support a more flexible node interconnection scenario and application to a complex communication structure.

Therefore, how to implement a network system capable of satisfying transmission of a plurality of data types and featuring flexible configuration, high reliability, low costs, and low transmission latency has become a pressing problem.

### SUMMARY

The present disclosure provides a method for transmitting data in a network, a chip, and a communication system, which can support the transmission of a plurality of data types in a same data packet, form a flexibly configured network, improve the reliability of network transmission, and reduce the data transmission latency.

In a first aspect, a method for transmitting data in a network is provided, wherein the network comprises a head node and N child nodes (N greater than 1), and the method for transmitting data in a network comprises: initiating, via the head node, transmission of a first public packet comprising first public data; receiving, via an i-th child node, the first public packet transmitted sequentially in the network, and adding first node data to the first public packet; and receiving, via an termination node, the first public packet transmitted sequentially through the N child nodes in the network, wherein the first public packet comprises the first public data and the first node data, or alternatively, receiving, via the termination node after a k-th child node receives the first public packet transmitted sequentially in the network and obtains the first node data in the first public packet, the first public packet transmitted sequentially through the N child nodes in the network, wherein the first public packet comprises the first public data, wherein i is less than k in a transmission sequence.

In a possible implementation, the termination node is the head node, or the termination node is a last child node among the N child nodes.

In a possible implementation, the network further comprises a branch child node of the i-th child node, and while the i-th child node recieves the first node packet and adds the first node data to the first node packet, the method further comprises: sending, via the i-th child node, the first public packet to a branch child node of the i-th child node, wherein the branch child node of the i-th child node is only connected to the i-th child node.

In a possible implementation, the network further comprises a branch child node of the i-th child node, and prior to the receiving, via the i-th child node, the first public packet and adding first node data to the first public packet, the method further comprises: sending, via the branch child node of the i-th child node, the first node data to the i-th child node, wherein the branch child node of the i-th child node is only connected to the i-th child node, and the first node data is generated by the branch child node of the i-th child node or a peripheral device connected to the branch child node of the i-th child node.

In a possible implementation, the first public packet further comprises first non-public data, the first public data comprises at least one of audio data or broadcast data, and the first non-public data comprises at least one of configuration data, read data, interrupt data, control data, command data, radar data, video data, image data, sensing data, and vehicle management data.

In a possible implementation, the head node segments an idle portion in the first public packet into one or more idle fields of equal length.

In a possible implementation, after receiving the first public packet transmitted sequentially in the network and obtaining the first non-public data, an f-th child node marks a field corresponding to the first non-public data as an idle field, or the f-th child node receives the first public packet transmitted sequentially in the network and sends the first public packet to a branch child node of the f-th child node, so that the branch child node of the f-th child node obtains the first non-public data in the first public packet. Concurrently, the f-th child node marks the field corresponding to the first non-public data as the idle field, and then sends the first public packet to a next node connected the f-th child node, the next node being the child node or the termination node.

In a possible implementation, the adding, via the i-th child node, the first node data to the first public packet comprises: adding, via the i-th child node, the first node data to the idle field in the first public packet.

In a possible implementation, the adding, via the i-th child node, the first node data to the idle field in the first public packet comprises: segmenting, via the i-th child node, the first node data, so that the first node data comprises at least two segments of the first node data; and adding, via the i-th child node, the at least two segments of the first node data to a plurality of the idle fields in the first public packet respectively.

In a possible implementation, the adding, via the i-th child node, the first node data to the idle field in the first public packet comprises: segmenting, via the i-th child node, the first node data, so that the first node data comprises at least two segments of the first node data; and adding, via the i-th child node, a first portion of each of the at least two segments of the first node data to the idle field in the first public packet respectively.

In a possible implementation, the method further comprises: initiating, via the head node, transmission of a second public packet comprising second public data; receiving, via the i-th child node, the first public packet transmitted sequentially in the network, and adding a second portion of the at least two segments of the first node data to an idle field in the second public packet; and receiving, via the termination node, the first public packet and the second public packet, and combining the first portion of the at least two segments of the first node data and the second portion of the at least two segments of the first node data into the first node data.

In a possible implementation, the receiving, via the i-th child node, the first public packet and adding the first node data to the first public packet comprises: receiving, via the i-th child node, the first public packet, parsing whether the first public packet further comprises an idle portion, and adding, in response to the first public packet comprising the idle portion, the first node data to the first public packet.

In a possible implementation, when the termination node is the head node, the method further comprises: parsing, via the head node, the first public packet, to determine whether a target node of the first node data in the first public packet is the head node.

In a possible implementation, the head node obtains, in response to the target node of the first node data being the head node, the first node data in the first public packet; and the head node initiates, in response to the target node of the first node data not being the head node, transmission of a first node packet comprising the first node data in a transmission direction of the first node packet same as or different from a transmission direction of the first public packet.

In a possible implementation, the first node data comprises first addressing information for indicating the target node of the first node data.

In a possible implementation, the first node data is generated by the i-th child node or generated by a peripheral device connected to the i-th child node.

In a second aspect, a method for transmitting data in a network is provided, wherein the network comprises a head node and N child nodes, where N is an integer greater than 1, the method comprising: initiating, via a start node, transmission of a first node packet comprising a first packet header; receiving, via an i-th child node, the first node packet transmitted sequentially in the network, and adding first node data to the first node packet; and receiving, via an termination node, the first node packet transmitted sequentially through the N child nodes in the network, wherein the first node packet comprises the first packet header and the first node data; or alternatively, receiving, via the head node after a k-th child node receives the first node packet transmitted sequentially in the network and obtains the first node data in the first node packet, the first node packet transmitted sequentially through the N child nodes in the network, wherein the first node packet comprises the first packet header, and i is less than k in a transmission sequence.

In a possible implementation, both the start node and the termination node are the head node, or the start node is the head node and the termination node is a last child node among the plurality of child nodes, or the start node is the last child node among the plurality of child nodes and the termination node is the head node.

In a possible implementation, the network further comprises a branch child node of the i-th child node, and while the i-th child node recieves the first node packet and adds the first node data to the first node packet, the method further comprises: sending, via the i-th child node, the first node packet to the branch child node of the i-th child node, wherein the branch child node of the i-th child node is only connected to the i-th child node.

In a possible implementation, the network further comprises a branch child node of the i-th child node, and prior to the receiving, via the i-th child node, the first node packet and adding the first node data to the first node packet, the method further comprises: sending, via the branch child node of the i-th child node, the first node data to the i-th child node, wherein the branch child node of the i-th child node is only connected to the i-th child node, and the first node data is generated by the branch child node of the i-th child node or a peripheral device connected to the branch child node of the i-th child node.

In a possible implementation, the first node data comprises first public data, the first node packet further comprises a public data field, and the receiving, via the i-th child node, the first node packet and adding the first node data to the first node packet comprises: receiving, via the i-th child node, the first node packet, and adding the first public data to the public data field in the first node packet.

In a possible implementation, the method further comprises: segmenting, via the start node, the first node packet into one or more idle fields of equal length.

In a possible implementation, the start node initiates transmission of the first node packet in a first direction, the first node packet further comprises first target data, and the method further comprises: receiving, via a j-th child node in response to a target node of the first target data being the j-th child node, the first node packet transmitted sequentially in the network and obtaining the first target data in the first node packet; or receiving, via the j-th child node in response to the target node of the first target data being a branch child node of the j-th child node, the first node packet transmitted sequentially in the network, sending the first node packet to a branch node of the j-th child node, receiving the first node packet via the branch child node of the j-th child node, and obtaining the first target data in the first node packet.

In a possible implementation, the receiving, via the k-th child node, the first node packet transmitted sequentially in the network and obtaining the first node data in the first node packet comprises: receiving, via the k-th child node, the first node packet transmitted sequentially in the network, obtaining the first node data in the first node packet, and marking a field corresponding to the first node data as an idle field.

In a possible implementation, the receiving, via the i-th child node, the first node packet transmitted sequentially in the network and adding the first node data to the first node packet comprises: receiving, via the i-th child node, the first node packet transmitted sequentially in the network, and adding the first node data to the idle field in the first node packet.

In a possible implementation, the first node data comprises first non-public data and/or first public data, the i-th child node receives the first node packet transmitted sequentially in the network and adds the first non-public data to the idle field in the first node packet, and/or the first node packet further comprises a public data field, and the i-th child node receives the first node packet transmitted sequentially in the network and adds the first public data to the public data field.

In a possible implementation, the first public data comprises at least one of audio data or broadcast data, and the first non-public data comprises at least one of configuration data, read data, interrupt data, control data, command data, radar data, video data, image data, sensing data, and vehicle management data.

In a possible implementation, the method further comprises: segmenting, via the i-th child node, the first node data, so that the first node data comprises at least two segments of the first node data; and adding, via the i-th child node, the at least two segments of the first node data to a plurality of the idle fields in the first node packet respectively.

In a possible implementation, the method further comprises: segmenting, via the i-th child node, the first node data, so that the first node data comprises at least two segments of the first node data; and adding, via the i-th child node, a first portion of each of the at least two segments of the first node data to the idle field in the first node packet respectively.

In a possible implementation, the method further comprises: initiating, via the start node, transmission of a second node packet comprising a second packet header; receiving, via the i-th child node, the second node packet transmitted sequentially in the network, wherein the second node packet comprises an idle field of the second node packet, adding, via the i-th child node, a second portion of the at least two segments of the first node data to the idle field of the second node packet; and receiving, via the termination node, the first node packet and the second node packet, and combining the first portion of the at least two segments of the first node data and the second portion of the at least two segments of the first node data into the first node data.

In a possible implementation, the receiving, via the i-th child node, the first node packet and adding the first node data to the first node packet comprises: receiving, via the i-th child node, the first node packet, parsing whether the first node packet further comprises an idle portion, and adding, in response to the first node packet further comprising the idle portion, the first node data to the first node packet, or receiving, via the i-th child node in response to the first node data comprising first non-public data, the first node packet, parsing whether the first node packet further comprises an idle portion, and adding, in response to the first node packet comprising the idle portion, the first non-public data to the first node packet.

In a possible implementation, when both the start node and the termination node are the head node, the method further comprises: parsing, via the head node, the first node packet, to determine whether a target node of the first node data in the first node packet is the head node.

In a possible implementation, the head node obtains, in response to the target node of the first node data being the head node, the first node data in the first node packet; and the head node initiates, in response to the target node of the first node data not being the head node, transmission of a third node packet comprising the first node data in a transmission direction of the third node packet same as or different from a transmission direction of the first node packet.

In a possible implementation, the first target data comprises first addressing information for indicating the target node of the first target data.

In a possible implementation, the first node data is generated by the i-th child node or generated by a peripheral device connected to the i-th child node.

In a possible implementation, when the start node is the last child node, the termination node is the head node, the network comprises a first link and a second link, and the head node connects the first link to the second link, the method further comprises: parsing, via the head node, the first node packet, to determine whether a target node of the first node data in the first node packet is the head node, wherein the first node packet is transmitted to the head node in the first link; and initiating, via the head node in response to the target node of the first node data in the first node packet not being the head node, transmission of a fourth node packet in the second link, wherein the fourth node packet comprises the first node data.

In a third aspect, a chip is provided, comprising a processor and a memory, wherein the memory is configured to store a computer program, and the processor is configured to invoke and run the computer program stored in the memory, to implement the method according to any one implementation in the first aspect or the second aspect.

In a fourth aspect, a system is provided, comprising the chip according to the third aspect and a peripheral device, wherein the peripheral device is connected to and communicates with the chip.

### BRIEF DESCRIPTION OF DRAWINGS

FIG. 1 is a schematic structural diagram of a system provided in an embodiment of the present disclosure;
FIG. 2 is a first schematic diagram of a network system provided in an embodiment of the present disclosure;
FIG. 3 is a second schematic diagram of a network system provided in an embodiment of the present disclosure;
FIG. 4 is a first schematic diagram of another network system provided in an embodiment of the present disclosure;
FIG. 5 is a second schematic diagram of another network system provided in an embodiment of the present disclosure;
FIG. 6 is a first schematic flowchart of a method 100 for data transmission provided in an embodiment of the present disclosure;
FIG. 7(a) is a first schematic diagram of a process based on a method 100 provided in an embodiment of the present disclosure;
FIG. 7(b) is a second schematic diagram of a process based on a method 100 provided in an embodiment of the present disclosure;
FIG. 7(c) is a third schematic diagram of a process based on a method 100 provided in an embodiment of the present disclosure;
FIG. 7(d) is a fourth schematic diagram of a process based on a method 100 provided in an embodiment of the present disclosure;
FIG. 8(a) is a first schematic diagram of a data format of a first public packet based on a method 100 provided in an embodiment of the present disclosure;
FIG. 8(b) is a second schematic diagram of a data format of a first public packet based on a method 100 provided in an embodiment of the present disclosure;
FIG. 9 is a first schematic diagram of another data format of a first public packet based on a method 100 provided in an embodiment of the present disclosure;
FIG. 10(a) is a first schematic diagram of still another data format of a first public packet based on a method 100 provided in an embodiment of the present disclosure;
FIG. 10(b) is a second schematic diagram of yet another data format of a first public packet based on a method 100 provided in an embodiment of the present disclosure;
FIG. 11 is a schematic diagram of data transmission corresponding to an example process 200 provided in an embodiment of the present disclosure;
FIG. 12 is a second schematic flowchart of a method 100 for data transmission provided in an embodiment of the present disclosure;
FIG. 13 is a schematic flowchart of a method 300 for data transmission provided in an embodiment of the present disclosure;
FIG. 14(a) is a first schematic diagram of a data format of a first node packet based on a method 300 provided in an embodiment of the present disclosure;
FIG. 14(b) is a second schematic diagram of a data format of a first node packet based on a method 300 provided in an embodiment of the present disclosure;
FIG. 15(a) is a first schematic diagram of a process based on a method 300 provided in an embodiment of the present disclosure;
FIG. 15(b) is a second schematic diagram of a process based on a method 300 provided in an embodiment of the present disclosure;
FIG. 15(c) is a third schematic diagram of a process based on a method 300 provided in an embodiment of the present disclosure;
FIG. 16(a) is a first schematic diagram of another process based on a method 300 provided in an embodiment of the present disclosure;
FIG. 16(b) is a second schematic diagram of still another process based on a method 300 provided in an embodiment of the present disclosure;
FIG. 17(a) is a first schematic diagram of a data format based on a first node packet in a method 300 provided in an embodiment of the present disclosure;
FIG. 17(b) is a second schematic diagram of a data format based on a first node packet in a method 300 provided in an embodiment of the present disclosure;
FIG. 18 is a schematic diagram of data transmission corresponding to an example process 400 provided in an embodiment of the present disclosure;
FIG. 19 is a second schematic flowchart of a method 300 for data transmission provided in an embodiment of the present disclosure;
FIG. 20 is a schematic structural diagram of a chip provided in an embodiment of the present disclosure; and
FIG. 21 is a schematic structural diagram of a communication system provided in an embodiment of the present disclosure.

### DETAILED DESCRIPTION

Nowadays, vehicle devices and functions are evolving toward greater diversification, with various types of data being transmitted in a vehicle to support different application scenarios of a vehicle system, such as vehicle audio data. However, the vehicle audio data still needs to be transmitted relying on a simulation solution specifically by first processing the audio data via a centralized power amplifier and then transmitting the processed audio data to various audio devices via analog audio cables for playing. At present, an A2B-based digital audio solution is also emerging. However, the A2B-based digital audio solution only supports transmission via a single serial daisy-chain, which exhibits defects such as low bandwidth, long latency, and poor reliability. Further, the A2B-based digital audio solution fails to support large-scale data transmission except for the audio data. In addition, the current mainstream solution for vehicle non-audio data transmission is based on Ethernet and CAN bus transmission. However, with the development of intelligence, the CAN bus fails to satisfy the requirements for transmission rate and latency. At present, vehicle Ethernet uses conventional switch-based communication, which is mature and reliable, but requires a plurality of switches to connect vehicle ECUs, does not support direct communication with a vehicle sensor, is costly, requires complex implementation, and fails to support a more flexible node interconnection scenario and application to a complex communication structure. Therefore, at present, no network system is adaptable to transmission of a plurality of data types and capable of concurrently implementing audio data transmission and non-audio data transmission.

Therefore, the present disclosure presents a method for network transmission, a chip, and a system, which can implement network data transmission for a plurality of data types, with flexible configuration, high reliability, low costs, and low transmission latency.

It should be understood that the term "vehicle," "vehicle-mounted," or "in-vehicle," or other similar terms used herein generally include various private vehicles or commercial vehicles, such as a sedan, a sport utility vehicle, a bus, or a truck, further include various boats, ships, aircrafts, etc., and include a hybrid vehicle, an electric vehicle, a plug-in hybrid electric vehicle, a hydrogen-powered vehicle, other alternative fuel vehicles, and the like.

The technical solutions in the present disclosure will be clearly and completely described below with reference to the drawings. Obviously, the described embodiments are merely used for explaining the present disclosure, rather than limiting the present disclosure. All other embodiments obtained by those of ordinary skills in the art based on the embodiments of the present disclosure without creative work are encompassed within the scope of protection of the present disclosure. In addition, it should be further noted that, for ease of description, only the portions related to the present disclosure, instead of all structures, are shown in the drawings.

It should be understood that the steps disclosed in the method embodiments of the present disclosure may be executed in different sequences and/or may be executed in parallel. Further, the method embodiments may include additional steps and/or implementation of illustrated steps may be omitted. The scope of the present disclosure is not limited in this respect.

The term "including" and variations thereof used herein are open-ended inclusion, i.e., "including, but not limited to." The term "based on" is "at least partially based on." The term "an embodiment" means "at least one embodiment"; the term "another embodiment" means "at least one additional embodiment"; and the term "some embodiments" means "at least some embodiments". Relevant definitions of other terms will be given in the description below. It should be noted that the concepts such as "first" and "second" mentioned in the present disclosure are only used to distinguish among different apparatuses, modules or units, and are not used to limit the order or interdependence relationship of the functions implemented by these apparatuses, modules or units.

In the embodiments of the present disclosure, the term "and/or" describes an association relationship between associated objects, and means that there may exist three relationships, for example, A and/or B may represent three situations: A exists alone, both A and B exist, and B exists alone. The character "/" generally means that there is an "or" relationship between associated objects therebefore and thereafter.

As used throughout the description and in the claims, a list of items connected by the term "at least one of" or "one or more of" may mean any combination of listed items. For example, the phrase "at least one of A, B, or C" may mean A; B; C; A and B; A and C; B and C; or A, B and C.

The term "circuit" or "module" may refer to one or more passive and/or active components arranged to cooperate with each other in providing desired functions. The terms "coupling" and "connection" along with derivatives thereof may be used herein to describe a functional or structural relationship among components. It should be understood that these terms are not intended as synonyms of each other. On the contrary, in a particular embodiment, the "connection" includes, but is not limited to, communication connection, electrical connections, and the like, and may be used to indicate that two or more than two elements come in direct physical, optical, or electrical contact with each other. The "coupling" may be used to indicate that two or more than two elements come in physical or electrical contact with each other directly or indirectly (with other intervening elements between them), and/or that two or more than two elements cooperate or interact with each other (e.g., as in a causal relationship).

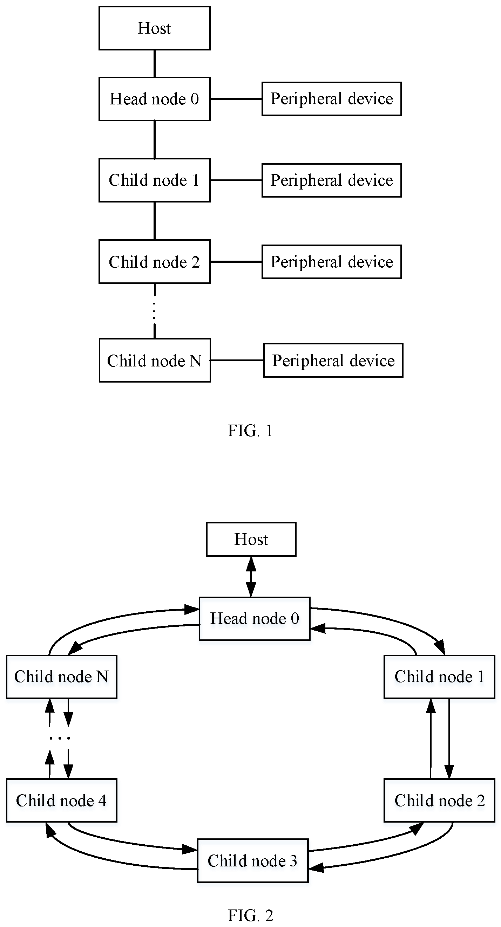

FIG. 1 is a schematic structural diagram of a system provided in an embodiment of the present disclosure. As shown in FIG. 1, the system structure comprises a host, a head node 0, and N child nodes, wherein N is greater than 1, and the N child nodes include child nodes 1, 2, ..., and N. The host may be connected to the head node through any peripheral interface, such as an Inter-Integrated Circuit (I2C), a Serial Peripheral Interface (SPI), a Universal Asynchronous Receiver/Transmitter (UART), or a System Management Interface (SMI). The head node and the N child nodes may be sequentially connected and communicate through a physical transmission medium, such as a twisted pair, which is not specifically limited in the present disclosure. The host, the head node, and the N child nodes communicate with each other to form a network link. The head node may directly receive, e.g., data, information, or a command sent from the host, and can encapsulate and merge the data, information, and command before downlink transmission to the N child nodes, or the head node may directly generate data and transmit the data in the downlink to the N child nodes. The host controls and instructs the N child nodes in the network link through the head node. Specifically, after data processing through the head node, the host transmits the data in the downlink to the N child nodes or collects the data transmitted in the uplink from the N child nodes. In the downlink transmission, data processing comprises, e.g., data encapsulation or unpacking, and in the uplink transmission, data processing comprises, e.g., data decapsulation or packing. One of the child nodes may forward data sent from a previous adjacent node to a next adjacent node, obtain data collected by a peripheral device, and transmit it in the uplink to the head node. The head node may directly receive the collected data, or process it and then further transmit the processed data to the host.

The host is a device controlling or processing the network link. For example, the host may be or may include one or more of various processors such as a Digital Signal Processor (DSP), a Microcontroller Unit (MCU), or a Central Processing Unit. The head node and the child nodes are used for data transmission in the network link, and may be any device, module or chip capable of implementing the solutions of the present disclosure, for example, may be a Physical Layer (PHY) chip. In order to achieve shorter latency, higher bandwidth utilization, and more precise data transmission, the network link transmission in an embodiment of the present disclosure can be defined based on an Ethernet protocol or on a private Ethernet packet format, to support full-duplex transmission and increase the transmission bandwidth.

In addition, the head node and the child nodes may each be connected to a peripheral device. The present disclosure does not impose any limitation on the connection between the head node or the child nodes and the peripheral device. For example, the child node 1 may be connected to one or more peripheral devices through an I2C bus, or may be connected to a plurality of peripheral devices through a plurality of I2C buses. The head node and the child nodes are connected to the peripheral devices, to implement different functional applications. The peripheral device may be various communication sensing devices, such as a microphone, a speaker, an audio amplifier, a millimeter wave radar, a lidar, an ultrasonic radar, a camera, a positioning system, a speed sensor, a humidity sensor, a light intensity sensor, or a speaker. For example, when the system structure shown in FIG. 1 is applied to a vehicle audio scenario, the peripheral device may be a speaker and/or a microphone.

It should be understood that features such as the host, the head node, and the child nodes involved in an embodiment of the present disclosure may be a logical concept or an entity concept. Further, a plurality of features may be a plurality of physical devices respectively, or a plurality of features may be integrated into one physical device. For example, the host and the head node may be integrated into a circuit board or a physical device. The present disclosure does not impose any specific limitation on this.

An embodiment of the present disclosure provides a first schematic diagram of a ring network system formed by the system structure shown in FIG. 1. As shown in FIG. 2, nodes in the figure include a head node 0 and N child nodes, wherein N is greater than 1. It should be understood that the embodiments of the present disclosure do not impose any limitation on the number of child nodes, and the head node and the child nodes may each be connected to a peripheral device. For the sake of simplicity, the peripheral devices connected to the head node and the child nodes are not shown in the figure. In FIG. 1, the head node 0, and the child nodes 1, 2, 3, 4, ..., and N are sequentially connected through the physical transmission medium, to form a ring network system, so that communication data can be transmitted in the ring network system. That is to say, different from an existing serial daisy-chain network transmission solution in which the head node is not connected to or communicates with a last child node, in the ring network transmission provided in the embodiments of the present disclosure, the first child node and the last child node in the network link are each connected to the head node and are capable of data communication. In the ring network system, data transmission includes two directions, namely a first direction and a second direction, wherein the second direction is opposite to the first direction. For example, the first direction may be regarded as a clockwise direction of the ring network shown in the figure, and the second direction may be regarded as a counterclockwise direction of the ring network shown in the figure. In the first direction, the flow direction of data transmission may be head node 0→child node 1→child node 2→child node 3→child node 4→...→child node N→head node 0→child node 1→... It should be understood that data may be transmitted in any number of nodes along the first direction, or may be transmitted cyclically in the first direction. In the second direction, the flow direction of data transmission may be head node 0→child node N→...→child node 4→child node 3→child node 2→child node 1→head node 0→child node N→... It should be understood that data may be transmitted in any number of nodes along the second direction, or may be transmitted cyclically in the second direction.

The ring network structure shown in FIG. 2 can support more flexible and diverse data transmission and node configuration solutions, to satisfy the network transmission requirements in a variety of scenarios.

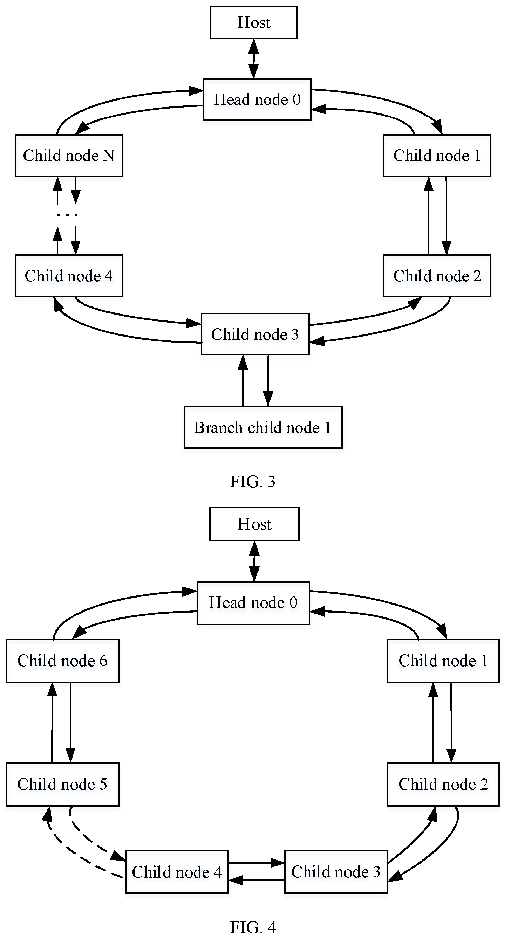

On the basis of the ring network system shown in FIG. 2, the present disclosure further provides a second schematic diagram of a ring network system formed by the system structure shown in FIG. 1. As shown in FIG. 3, nodes in the figure include a head node 0, N child nodes and a branch child node 1. The branch child node 1 is only connected to a child node, for example, a child node 3 in the network system. It should be understood that the embodiments of the present disclosure do not impose any limitation on the number of child nodes and branch child nodes, and the head node, the child nodes, and the branch child node may each be connected to a peripheral device. For the sake of simplicity, the peripheral devices connected to the head node and the child nodes are not shown in the figure. In FIG. 1, the head node 0 and the child nodes 1, 2, 3, 4, ..., and N are sequentially connected through the physical transmission medium, the branch child node 1 is only connected to the child node 3 through the physical transmission medium, and the branch child node 1 can only communicate with the child node 3, thus forming a particular branched ring network system, so that communication data can be transmitted in the ring system. Different from the ring network system shown in the above FIG. 2, the branch child node 1, as a branch child node in the ring network system, only communicates with the child node 3 connected thereto. It should be understood that in this ring network system carrying the branch child node, a plurality of child nodes may serve as branch child nodes, and the branch child nodes may be connected to a given child node, or may be connected to different child nodes. For example, the child node 3 may be connected to a plurality of branch child nodes. For example, the child node 4 may also be connected to one or more child nodes, and the one or more child nodes serve as branch child nodes. In an embodiment of the present disclosure, example description is provided only in a case where the branch child node 1 is connected to the child node 3 and the branch child node 1 serves as the branch child node. In the ring network system, transmission also includes two directions, namely a first direction and a second direction, wherein the second direction is opposite to the first direction. For example, the first direction may be regarded as a clockwise direction of the ring network shown in the figure, and the second direction may be regarded as a counterclockwise direction of the ring network shown in the figure. In the first direction, the flow direction of data transmission may be head node 0→child node 1→child node 2→child node 3→child node 4→...→child node N→head node→child node 1→.... It should be understood that data may be transmitted in any number of nodes along the first direction, or may be transmitted cyclically in the first direction. In the second direction, the flow direction of data transmission may be head node→child node N→...→child node 4→child node 3→child node 2→child node 1→head node→child node N→... It should be understood that data may be transmitted in any number of nodes along the second direction, or may be transmitted cyclically in the second direction. In addition, when a branch child node, such as the branch child node 1, is required to be involved in the data transmission, the data transmitted in the first direction or the second direction is sent to the branch child node from a child node connected to the branch child node, or the data is sent from the branch child node to the child node connected to the branch child node and then transmitted in the first direction or the second direction. For example, in the transmission in the first direction, data received by the child node 3 is sent to the child node 4, and also concurrently sent to the branch child node 1, or the branch child node 1 sends its data to the child node 3, and then the child node 3 sends the data to the child node 4 for continued transmission. That is to say, if the branch child node 1 serves as a branch child node in the ring network system for data transmission, the data transmission must be implemented through the child node 3 connected to thereto. It should be noted that even if the ring network system comprises, e.g., a branch child node as shown by the branch child node 1, when the branch child node, e.g., the branch child node 1 is not involved in transmission in the ring network system, the flow direction of data transmission is still as shown in FIG. 2. That is to say, if the branch child node 1 is not involved in transmission in the ring network system, for example, when no data is required to be received or added, the child node 3 can directly send data to the child node 4 without transmission through the branch child node 1.

The ring network solution with the branch child node as shown in FIG. 3 can reduce the wiring among the network nodes, and reduce the overall costs of the network system.

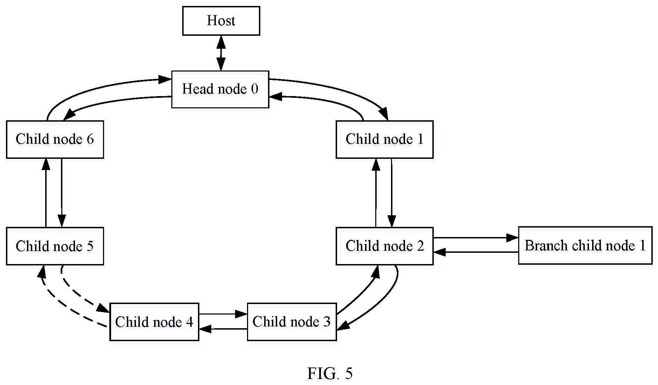

Based on the ring network system shown in FIG. 2 or FIG. 3, an embodiment of the present disclosure further presents a network system as shown in FIG. 4 and a network system as shown in FIG. 5. As shown in FIG. 4, the network system comprises the plurality of child nodes, for example, comprises 6 child nodes. If the child node 4 fails, the child node 4 may be disconnected from the child node 5, and the overall network structure may be divided into two links: the first link comprises the head node 0, the child nodes 1, 2, and 3, and the faulty child node 4, while the second link comprises the head node 0, the child node 6, and the child node 5. It should be understood that due to the failure of the child node 4, the child node 4 is not involved in the data transmission in the first link, and the failure of the child node 4 will neither affect the data transmission in the first link, nor affect the data transmission through the head node 0, the child node 6, and the child node 5 in the second link. Therefore, the network structure shown in FIG. 4 can improve the fault tolerance of the network system, and reduce the impact of child node failure on data transmission. In addition, use of the network structure shown in FIG. 4 can support disconnection among the child nodes, thus dividing the network structure into two links. Then, the data sent from the head node downward can be concurrently transmitted in the first link and the second link. Compared with the network structure of a complete ring network link shown in FIG. 2 or 3, use of the network structure shown in FIG. 4 for data transmission can shorten the data transmission latency, thereby ensuring the synchronization and timeliness of data transmission among different nodes, and improving the user experience. It should be understood that in the network structure shown in FIG. 4, although two links are available, only one of the links may be used for data transmission.

Similarly, the network system as shown in FIG. 5 may carry, e.g., a branch child node such as the branch child node 1 in FIG. 5, similar to the ring network system shown in FIG. 3. Specifically, the network system shown in FIG. 5 comprises a plurality of child nodes, such as 6 child nodes and 1 branch child node, wherein if the child node 4 fails, the child node 4 may be disconnected from the child node 5, and the overall network structure may be divided into two links: the first link comprises the head node 0, the child nodes 1, 2, and 3, and the faulty node child 4, and further comprises the branch child node 1 that is only connected to the child node 2, while the second link comprises the head node 0, the child node 6, and the child node 5. Since the child node 4 is a faulty node, the child node 4 is not involved in the data transmission in the first link. The failure of the child node 4 will neither affect the data transmission in the first link, nor affect the data transmission through the head node 0, the child node 6, and the child node 5 in the second link. It should be understood that in the network structure shown in FIG. 5, although two links are available, only one of the links may be used for data transmission. The network solution carrying the branch child node as shown in FIG. 5 can reduce the wiring among the network nodes, and reduce the overall costs of the network system.

In the ring network system shown in FIG. 2 or 3 and the network system shown in FIG. 4 or 5, the host can transmit data to the head node through various peripheral interfaces such as a Media Independent Interface (MII), an Inter-IC Sound (I2S) interface, or a Time Division Multiplexing (TDM) interface. Data is transmitted among the head node and the child nodes through a physical transmission medium, such as a twisted pair. Further, the data can be further transmitted to a peripheral device from the head node or the child nodes through a MII interface, a Serial Peripheral Interface (SPI), an Inter-Integrated Circuit (I2C) interface, a Pulse Width Modulation (PWM) interface, a General Purpose Input/Output (GPIO) interface, a Controller Area Network (CAN) bus, or a Local Interconnect Network (LIN) bus.

Further, an embodiment of the present disclosure provides a method 100 for data transmission, thereby forming data transmission in the ring network system as shown in FIG. 2 or 3 or data transmission in the network system as shown in FIG. 4 or 5, and supporting addition of new data via each child node to a data packet initiated by the head node or obtainment of data from a data packet transmitted in the network based on configuration and actual application requirements during the transmission of the data packet in the network. Further, a given data packet may carry data of different types simultaneously, thus forming more flexible network data transmission, improving the data transmission efficiency and bandwidth, reducing the data transmission latency, and reducing the network costs compared to the prior art.

It should be noted that data transmitted in the method and the system provided in an embodiment of the present disclosure can be segmented into public data and non-public data. The public data is, for example, publicly transmitted data such as audio data or broadcast data, that is, the public data refers to data that is publicly transmitted among the nodes in the network and can be received or processed by a plurality of nodes. The non-public data is, for example, non-publicly transmitted data such as configuration data, read data, interrupt data, control data, command data, radar data, video data, image data, sensing data, and vehicle management data, that is, the non-public data refers to any data except for the public data, and represents data that is not publicly transmitted among the nodes in the network and is only received or processed by a designated target node.

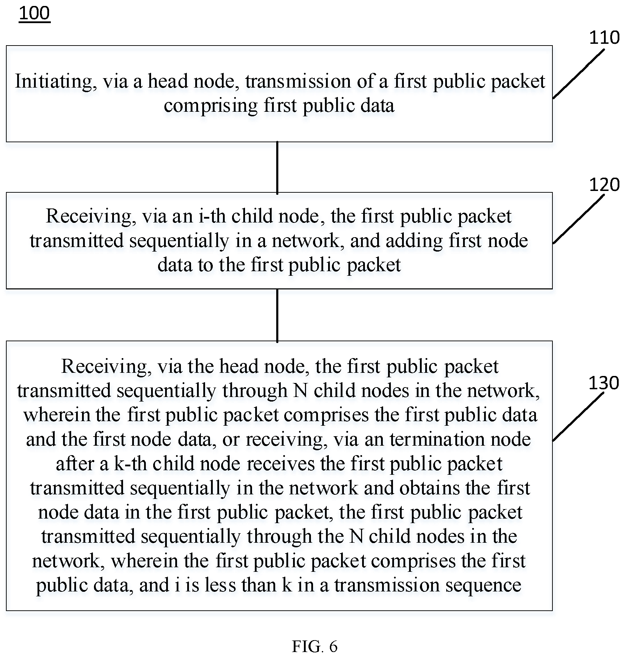

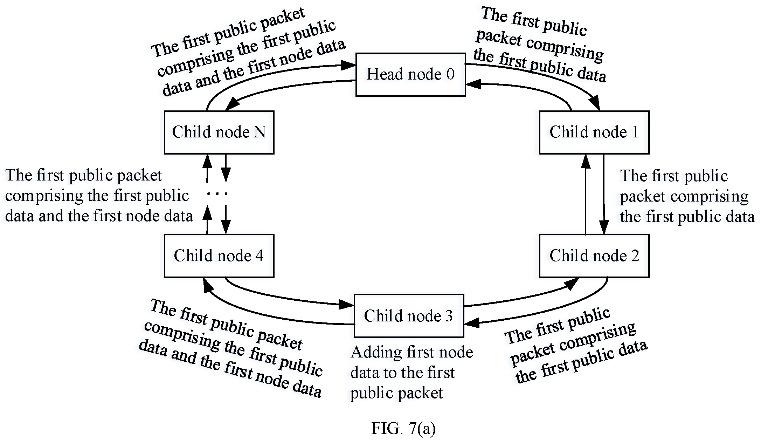

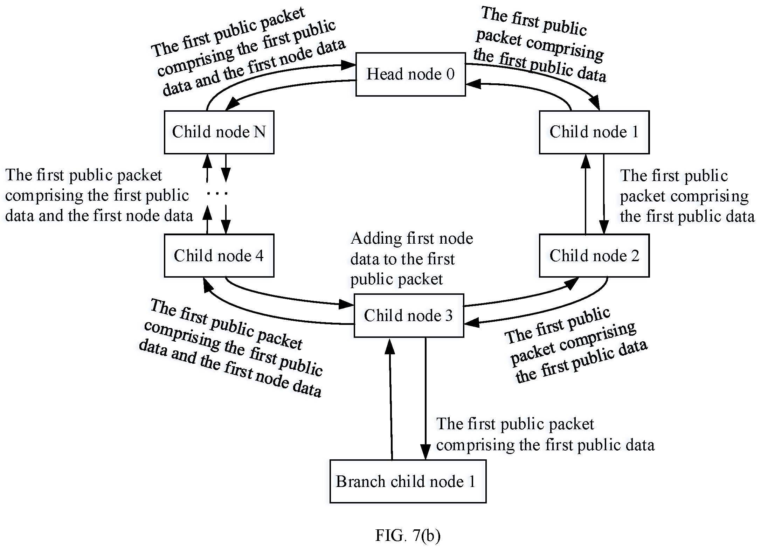

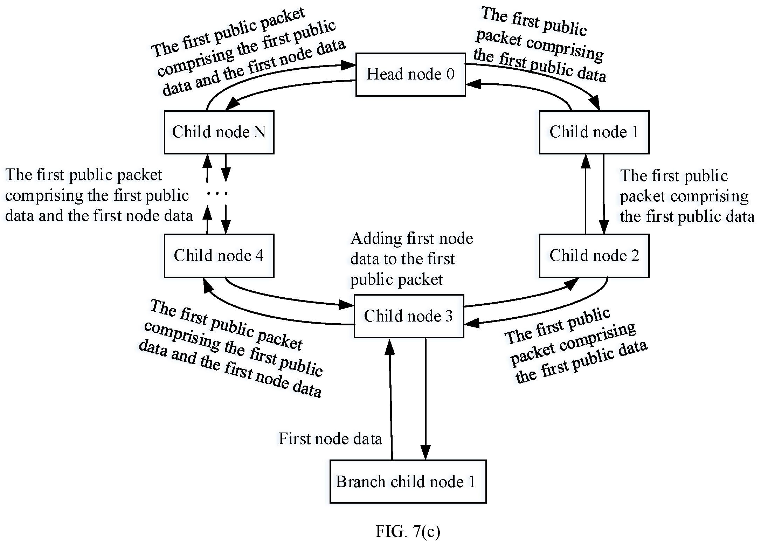

FIG. 6 is a flowchart of a method 100 for data transmission provided in an embodiment of the present disclosure. FIGS. 7(a), 7(b), and 7(c) are schematic diagrams of processes based on the method 100 provided in an embodiment of the present disclosure. As shown in FIG. 6, the method 100 for data transmission is applied to data transmission in the ring network system shown in FIG. 2 or 3 or data transmission in the network system shown in FIG. 4 or 5. The method 100 includes some or all of steps below:
Step 110: initiating, via a head node, transmission of a first public packet comprising first public data.

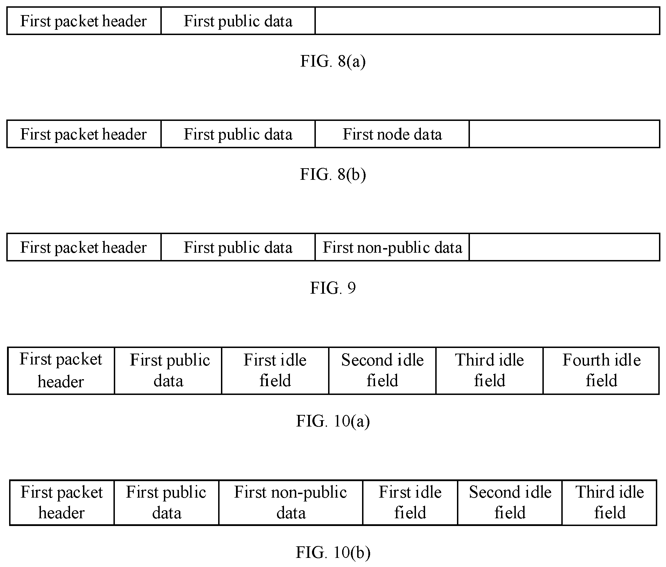

Specifically, for example, when the method 100 is applied to the ring network as shown in FIG. 2 or 3, as shown in FIG. 7(a) or 7(b), the head node 0 generates a first public packet and initiates transmission of the first public packet in a first direction, as shown in FIG. 8(a). In this case, the first public packet comprises first public data, which is public data sent from the head node downward to a child node. The public data is, for example, publicly transmitted data such as audio data or broadcast data. That is, the public data represents data that is publicly transmitted among various nodes in the network and can be received or processed by a plurality of nodes. In case of application to a vehicle audio scenario, the public data may be audio data.

It should be noted that when the method 300 is applied to the ring network shown in FIG. 2 or 3, the start node is the head node, the termination node is the head node, the first direction is the clockwise transmission direction shown in the figure, and the second direction is opposite to the first direction, that is, the counterclockwise transmission direction shown in the figure. For example, the head node initiates transmission of the first node packet in the first direction, that is, the clockwise direction shown in the figure. When the method 300 is applied to the network shown in FIG. 4 or 5, the start node is the head node and the termination node is a last child node of the network link, the first direction is a direction of transmitting data from the head node to a child node, and the second direction is, opposite to the first direction, a direction of transmitting data from a child node to the head node. public data. The first public packet may further comprise a first packet header, which is a public packet header of a data packet in data transmission through the ring network, and may be used to indicate real-time information of each node.

Step 120: receiving, via an i-th child node, the first public packet transmitted sequentially in a network, and adding first node data to the first public packet.

In the step 120, the first public packet is transmitted in the network, and is transmitted to the i-th child node in the first direction, wherein i is less than N, and the i-th child node adds the first node data to the first public packet. It should be noted that the first node data may be generated by the i-th child node itself, or may be generated by a peripheral device connected to the i-th child node. The first node data may be any of the above-mentioned public data or non-public data, such as audio data collected by the peripheral device connected to the i-th child node. The embodiments of the present disclosure do not impose any limitation on specific content and function of the first node data.

Step 130: receiving, via an termination node, the first public packet transmitted sequentially through N child nodes in the network, wherein the first public packet comprises the first public data and the first node data; or alternatively, receiving, via the termination node after a k-th child node receives the first public packet transmitted sequentially in the network and obtains the first node data in the first public packet, the first public packet transmitted sequentially through the N child nodes in the network, wherein the first public packet comprises the first public data, and i is less than k in a transmission sequence.

In the step 130, in case of application to the ring network system shown in FIG. 2 or 3, the termination node is the head node, that is, the head node initiates the transmission as the start node and ends the transmission as the termination node. In case of application to the network system shown in FIG. 4 or 5, the termination node is the last child node, that is, the last child node connected to the first link or the second link in FIG. 4 or 5 and working normally. The node data added by the i-th child node may be received by the termination node after network transmission, or may be received by a child node such as the k-th child node, wherein k is less than N, and i is less than k in the first direction of data transmission.

Further, if the method 100 is applied to the network system shown in FIG. 3 or 5, that is, the network system further comprises a branch child node, and when the branch child node is involved in network data transmission, the method 100 may comprise a step below concurrently with step 120:
Step 121: sending, via the i-th child node, the first public packet to a branch child node of the i-th child node, wherein the branch child node of the i-th child node is only connected to the i-th child node.

Specifically, in the network system, the branch child node of the i-th child node is only connected to the i-th child node. After the i-th child node receives the first public packet in the step 120, if the branch child node of the i-th child node is involved in network data transmission as a branch child node, the i-th child node sends the first public packet to the branch child node of the i-th child node. It should be understood that while sending the first public packet to the branch child node, the i-th child node will also continue to transmit the first public packet to a child node next to the i-th child node in the first direction. In the step 121, the branch child node of the i-th child node may receive the first public data in the first public packet.

Or, the method 100 may comprise a step below before the step 120:
Step 122: sending, via the branch child node of the i-th child node, the first node data to the i-th child node, wherein the branch child node of the i-th child node is only connected to the i-th child node.

Specifically, in the network system, the branch child node of the i-th child node is only connected to the i-th child node. In the step 120, that is, before the i-th child node adds the first node data to the first public packet, the branch child node of the i-th child node sends the first node data to the i-th child node. The first node data is generated by the branch child node of the i-th child node or a peripheral device connected to the branch child node of the i-th child node. Then, the i-th child node adds the first node data to the first public packet and then continues the transmission along the first direction in the network. That is to say, when the step 120 is implemented after the step 122 is implemented, the first node data in the step 120 is generated by the branch child node of the i-th child node or the peripheral device connected to the branch child node of the i-th child node.

Here is an example transmission flow chart of the above method 100 applied to the ring network system shown in FIG. 2 or 3. In the step 130, if the head node receives the first public packet transmitted through the N child nodes in the first direction, in this case, the first public packet comprises the first public data and the first node data. As shown in FIG. 7(a), during the transmission of the first public packet along the first direction, for example, through the third child node, i.e., the child node 3, among the N child nodes, the child node 3 adds the first node data to the first public packet, after receiving the first public packet carrying the first public data. The node data may be generated by the child node 3 itself, or may be generated by a peripheral device connected to the child node 3. In this case, the first public packet comprises the first public data generated by the head node and the first node data added by the child node 3. The child node 3 continues to send the first public packet carrying the first public data and the first node data to a next node along the first direction, so that the first public packet is transmitted through the child nodes 4, ..., and N, and then received by the head node. As shown in FIG. 8(b), the received first public packet comprises the first public data and the first node data. It should be understood that during the transmission of the first public packet along the first direction, one or more of N nodes may add node data to the first public packet, and then transmit the first public packet to the head node through the ring network. That is, other child nodes except for the i-th child node may also add corresponding data to the first public packet. In an embodiment of the present disclosure, as an example, only the child node 3 adds the first node data to the first public packet.

Or, further, if the method 100 comprises the step 121, that is, the step 121 is also implemented concurrently with the step 120, as shown in FIG. 7(b), during the transmission of the first public packet along the first direction, when the first public packet is transmitted to the child node 3, because the child node 3 is connected to a branch child node, that is, the branch child node 1, the child node 3 receives the first public packet comprising the first public packet, then sends the first public packet to the branch child node 1. At the same time, the child node 3 adds the first node data to the first public packet, and continues the transmission to the next node along the first direction. In this case, the first public packet comprises the first public data and the first node data. The first node data is generated by the child node 3 or the peripheral device connected to the child node 3. For another example, if the method 100 comprises the step 122, the step 122 is implemented before the step 120 is implemented. As shown in FIG. 7(c), the first public packet comprising the first public data is transmitted along the first direction. The branch child node 1 serves as a branch child node of the child node 3 and sends the first node data to the child node 3. When the first public packet is transmitted to the child node 3, the child node 3 adds the first node data sent from the branch child node 1 to the first public packet, and the child node 3 sends the first public packet comprising the first node data and the first public data to the next node to continue the transmission in the first direction. The first node data is generated by the branch child node 1 or a peripheral device connected to the branch child node 1. It should be understood that a plurality of child nodes may be available as the branch child node in FIG. 3, and one or more of the N nodes may receive the first public packet through the child node connected to the branch child node, or add the node data sent from the branch child node to the first public packet through the child node connected to the branch child node, and then transmit the first public packet to the head node through the ring network. In an embodiment of the present disclosure, as an example, only the branch child node 1 serves as the branch child node to implement the steps 121 and 122.

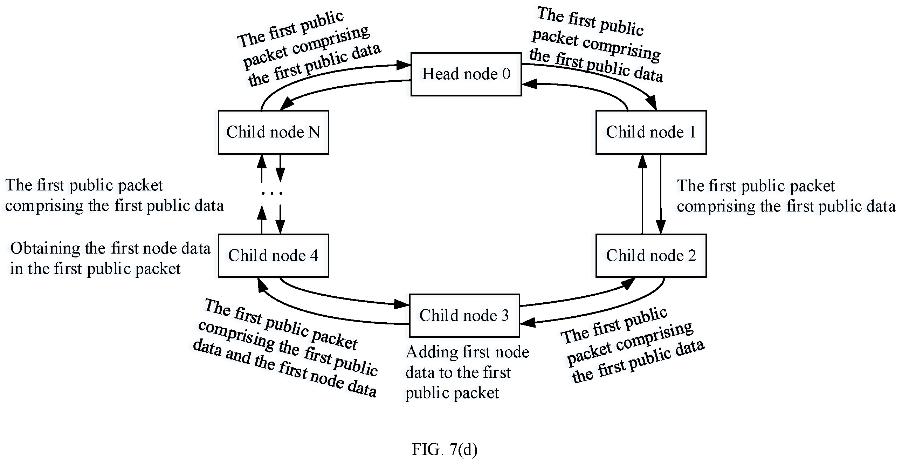

Or, in the step 130, after the k-th child node receives the first public packet and obtains the first node data in the first public packet, if the head node receives the first public packet transmitted through the N child nodes in the first direction, in this case, the first public packet comprises the first public data. As shown in FIG. 7(d), during the transmission along the first direction, the first public packet is transmitted, for example, through the third child node, that is, the child node 3, among the N child nodes. After receiving the first public packet carrying the first public data, the child node 3 adds the first node data to the first public packet. The first node data may be generated by the child node 3 itself, or may be generated by the peripheral device connected to the child node 3. In this case, the first public packet comprises the first public data generated by the head node and the first node data added by the child node 3. The child node 3 continues to send the first public packet carrying the first public data and the first node data to the next node along the first direction. During transmission through the child node 4, the child node 4 receives the first node data in the first public packet. In this case, the first public packet does not carry the first node data. Then, the child node 4 continues to send the first public packet carrying the first public data to a next node along the first direction until it is finally transmitted to the head node 0. The first public packet received by the head node 0 comprises the first public data. It should be understood that during the transmission of the first public packet along the first direction, one or more of the N nodes may add node data to the first public packet, and the first public packet may be received by a child node after the child node that adds the node data in the transmission sequence in the first direction, that is, the k-th child node receives the first public packet and obtains the first node data in the first public packet, wherein i is less than k, and finally the first public packet comprising the first public data is received by the head node 0. In an embodiment of the present disclosure, example description is provided only in a case where the child node 3 adds the first node data to the first public packet, and then the child node 4 receives and obtains the first node data in the first public packet.

It should be understood that a target node of the first node data in FIG. 7(d) is introduced with the child node 4 as an example. Optionally, the target node of the first node data in FIG. 7(d) may be any node after the child node 3 in the transmission sequence in the first direction.

It should be understood that if the method 100 is applied to the system shown in FIG. 4 or 5, the transmission process is similar to the above example, and the only difference is that the termination node of the final transmission is the last child node, such as the child node 3. For the sake of simplicity, no example is given here.

Therefore, the above method 100 can support transmission through various network systems, such as the transmission through the ring network system shown in FIG. 2 or 3 and the single-link and dual-link transmission shown in FIG. 4 or 5. Further, during transmission of a data packet in the network, any of the child nodes may add new data to the data packet initiated by the head node or to the data packet in the network based on configuration and actual application requirements, and a given data packet may carry data of different types, such as public data and node data, thus forming more flexible network data transmission, improving the data transmission efficiency and bandwidth, reducing data transmission latency, and lowering the overall network costs. If the method 100 further comprises the steps 121 or 122, it can further reduce network wiring, and further reduce the overall network system costs.

In an optional embodiment, in the step 110 of network transmission, as shown in FIG. 9, the first public packet sent from the head node may further comprise first non-public data. The first non-public data is, for example, non-public transmission data, such as configuration data, read data, interrupt data, control data, command data, radar data, video data, image data, sensing data, and vehicle management data sent from the head node downward to any child node. The present disclosure does not impose any limitation on specific contents and functions of the first non-public data. Specifically, in the network system, the head node may not only transmit the public data to each child node, but also send the non-public data to one or more of the child nodes, that is, the non-public data can be obtained by one or more target nodes. If the first non-public data is used to configure a target node of the first non-public data, such as configuring a node interface, a transmit/receive cycle, a node status, or peripheral devices of the nodes. It should be understood that the first public packet may comprise a plurality of non-public data, which are therefore obtained by a plurality of child nodes respectively. The present disclosure only provides introduction with the first non-public data as an example.

Optionally, the first non-public data may also be appended with target information of the first non-public data for indicating the target node of the first non-public data, that is, which node obtains the first non-public data. The present disclosure does not impose any limitation on specific data form of the target information of the first non-public data. Preferably, the target information of the first non-public data may be set as a packet header of the first non-public data.

If the first public packet further comprises the first non-public data, and the target node of the first non-public data is an f-th child node, the f-th child node receives the first public packet transmitted sequentially in the network and obtains the first public data.

Specifically, after the head node implements the step 110, the first public packet as shown in FIG. 9 is transmitted sequentially in the first direction in the network. During transmission through the target node of the first non-public data, the target node of the first non-public data obtains the first non-public data in the first public packet. In this case, the first public packet does not carry the first non-public data, and the target node of the first non-public data continues to transmit the first public packet without carrying the first non-public data to the next node in the first direction.

The target node of the first public data may further be a branch child node. That is, when the first public packet further comprises the first non-public data, and the target node of the first non-public data is a branch child node of the f-th child node, the f-th child node receives the first public packet transmitted sequentially in the network, and transmits the first public packet carrying the first public data to the branch child node of the f-th child node, so that the branch child node of the f-th child node obtains the first non-public data in the first public packet. Concurrently, the f-th child node marks a field corresponding to the first non-public data as an idle field, and then sends the first public packet to a next node connected the f-th child node, wherein the next node may be the child node or may be the termination node. As described in the steps 120 and 130 above, during the sequential transmission of the first public packet in the first direction in the network as shown in FIG. 9, the i-th child node may add node data to the first public packet, and the first public packet carrying the node data is transmitted to the termination node through the network. It should be understood that the embodiments of the present disclosure do not impose any limitation on the target node of the first non-public data and the node adding the node data. The target node of the first non-public data and the node adding the node data may be a given node, or may be different nodes. The embodiments of the present disclosure do not impose any limitation on the sequence of receiving the first non-public data and adding the node data, either.

Therefore, the first public packet initiated by the head node not only comprises the first public data, but also may comprise the first non-public data. That is, data of different types, namely public data and non-public data, may all be accommodated in a given data packet for network transmission, so as to improve the transmission efficiency of different data, and reduce the data transmission latency.

Further, in an optional embodiment, in the step 110, the method 100 further comprises:
Step 111: segmenting, via the head node, an idle portion in the first public packet into one or more idle fields of equal length.

As shown in FIG. 10(a), when the first public packet comprises the first public data, and since the first public packet currently comprising the first public data does not occupy the maximum bandwidth for data transmission, the first public packet comprises an idle portion, and the head node segments the idle portion into one or more idle fields of equal length, for example, a first idle field and a second idle field. It should be understood that the first idle field and the second idle field have equal length.

If the first public packet further comprises the first non-public data, as shown in FIG. 10(b), when the first public packet comprises the first public data and the first non-public data, the first public packet still comprises an idle portion, the head node segments the idle portion into a plurality of idle fields, and the plurality of idle fields have equal length.

That is, if the first public packet further comprises the first non-public data, the method 100 may further comprise:
Step 140: receiving, via an f-th child node, the first public packet, obtaining first non-public data in the first public packet, and marking a field corresponding to the first non-public data as an idle field.

Specifically, if the first public packet comprises the first non-public data, and the target node of the first non-public data is the child node f, that is, the first public packet comprises the first non-public data of the child node f, in addition to the step 111 where the idle field is segmented, in the step 140, that is, during the transmission of the first public packet in the first direction, after the first public packet comprising the first non-public data is received by the child node f, the child node f can mark the field corresponding to the first non-public data as idle, so that the first public packet can have more idle fields for adding new data.

Therefore, in the step 111 and/or the step 140, the first public packet may comprise idle fields, and a plurality of idle fields have equal length, so that each child node can more quickly identify whether idle bandwidth is available in the first public packet to add new data, thereby reducing the configuration complexity of the child nodes, improving the data adding efficiency of the child nodes, and featuring simple implementation.

After implementation of the step 111 and/or the step 140, the first public packet carries an idle field, so that when the step 120 is implemented, the step 120 comprises the step 123:
adding, via the i-th child node, the first node data to the idle field in the first public packet.

Specifically, when the first public packet is transmitted to the i-th child node in the network, the i-th child node, that is, the child node i, parses whether an idle field is present in the first public packet. In case of presence of the idle field, node data of the child node i is added to the idle field and then transmitted to the termination node. First node data of the child node i may be generated by the child node i itself or by a peripheral device connected to the child node i, which is not limited in an embodiment of the present disclosure.

It should be understood that both the steps 111 and 140 may exist, or only the step 111 or the step 140 may exist, and the i-th child node in the step 120 and the f-th child node in the step 140 may be a given child node or may be different child nodes. The step 111 and/or the step 140 must be implemented before the step 123 is implemented. If the idle field in the step 123 is generated in the step 140, f is less than or equal to i in the first direction.

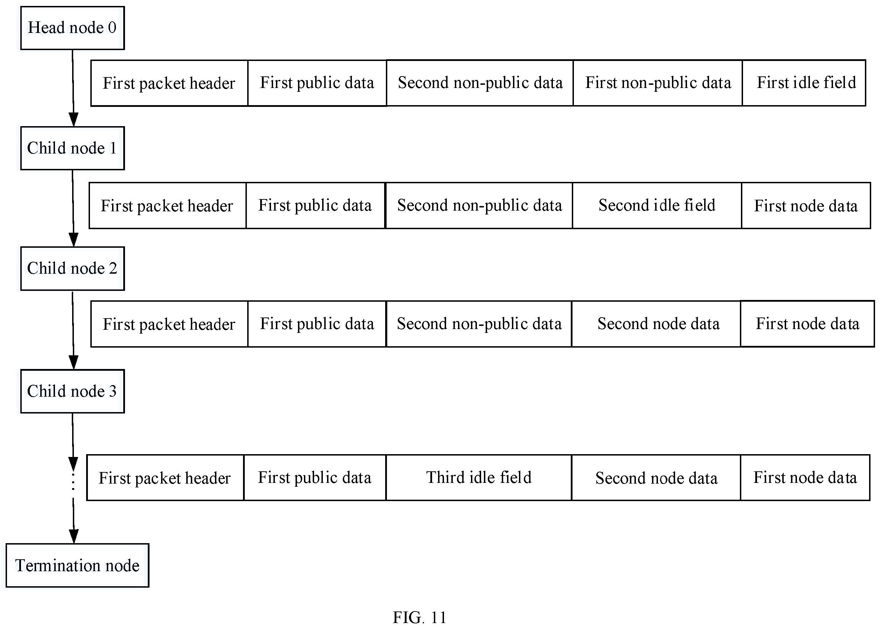

It should be understood that during the transmission of the first public packet in the first direction, the process of adding node data of a child node by the child node in the step 120 and the process of obtaining the first non-public data and marking an idle field in the step 140 may occur repeatedly, which is not limited in the present disclosure. Specifically, the present disclosure provides an example process 200 of the above method 100. FIG. 11 is a schematic diagram of data transmission corresponding to the example process 200. The process 200 comprises steps below:
Process 201: sending, via a head node 0, a first public packet in a first direction, wherein the first public packet comprises first public data, first non-public data, second non-public data, and a first idle field. The first idle field is an idle field segmented in the step 111. A target node of the first non-public data is a child node 1, and a target node of the second non-public data is a child node 3.

Optionally, when the first public packet sent from the head node has a too large data size, leaving no spare space for idle field segmenting, no idle field may be present, that is, the step 111 is not implemented.

Process 202: receiving, via a child node 1, the first public packet, obtaining first non-public data of the child node 1 in the first public packet, marking a field corresponding to the first non-public data of the child node 1 as an idle field, that is, a second idle field, adding first node data of the child node 1 to the first idle field, and then sending the first public packet to a child node 2. Optionally, the child node 1 may further add the first node data to the second idle field and then sends the first public packet to the child node 2. The present disclosure does not impose any limitation on the idle field to which the child node 1 adds the first node data. The first node data may be generated by the child node 1 itself, or may be generated by a peripheral device of the child node 1, which is not limited in the embodiments of the present disclosure.

Process 203: receiving, via the child node 2, the first public packet, adding second node data to the second idle field in the first public packet, and then sending the first public packet to a child node 3. As shown in the figure, in this case, the first public packet comprises the first public data, the second non-public data, the first node data, and the second node data. The second node data may be generated by the child node 2 itself, or may be generated by a peripheral device of the child node 2, which is not limited in the embodiments of the present disclosure.

Process 204: receiving, via the child node 3, the first public packet, obtaining the second non-public data in the first public packet, then marking a field corresponding to the second non-public data of the child node 3 as a third idle field, and sending the first public packet to a next node in the first direction. Optionally, in this case, if the child node 3 has node data of the child node 3 to be transmitted in the first direction, the node data of the child node 3 may be added to the third idle field and then the first public packet is sent to the next node.

Process 205: sequentially transmitting the first public packet comprising the first public data, the third idle field, the second node data, and the first node data through remaining child nodes in the first direction and finally to the termination node, and receiving the first public packet via the termination node. For example, if the method 100 is applied to the ring network shown in FIG. 2 or 3, the termination node is the head node 0.

Further, during implementation of the step 123, node data of a node may have a too large data size to be accommodated in a single idle field or all idle fields in a current first public packet, so that the step 123 may further comprise:
Step 1231: segmenting, via the i-th child node, the first node data, so that the first node data comprises at least two segments of the first node data.

When the node data of the node can be accommodated in a plurality of idle fields in the current first public packet, the step 123 comprises:
Step 1232: adding, via the i-th child node, the at least two segments of the first node data to a plurality of idle fields in the first public packet respectively.

It should be understood that in the step 1232, one first node data segment among the at least two segments of the first node data corresponds to one idle field, and a plurality of first node data segments correspond to the plurality of idle fields. Then, when receiving the first public packet carrying the at least two segments of the first node data, the termination node combines them into complete first node data.

When the node data of the node fails to be accommodated in all idle fields in the current first public packet, the step 123 comprises:
Step 1233: adding, via the i-th child node, a first portion of each of the at least two segments of the first node data to all idle fields in the first public packet respectively.

It should be understood that in the step 1233, since the number of idle fields in the current first public packet is limited, the i-th child node first accommodates a portion of the at least two segments of the first node data in all of the idle fields in the current first public packet. Similarly, one first node data segment corresponds to one idle field.

Further, the method 100 further comprises:
Step 150: initiating, via the head node, transmission of a second public packet comprising second public data.

Optionally, in the step 150, if the method 100 is applied to the ring network system shown in FIG. 2 or 3, the head node can initiate the transmission of the second public packet in the first direction or the second direction. If the method 100 is applied to the network system shown in FIG. 4 or 5, the head node initiates the transmission of the second public packet in the first direction. Step 160: receiving, via the i-th child node, the second public packet comprising an idle field, and adding a second portion of the at least two segments of the first node data to the idle field in the second public packet.

Step 170: receiving, via the termination node, the first public packet and the second public packet, and combining the first portion of the at least two segments of the first node data and the second portion of the at least two segments of the first node data into the first node data.

Specifically, the head node can transmit one or more business packets in the network, such as the first public packet and the second public packet. When applied to the ring network shown in FIG. 2 or 3, the first public packet and the second public packet may be transmitted in a same direction, or may be transmitted in different directions. For example, the first public packet and the second public packet are both transmitted in the first direction in the ring network. The first public packet comprises the first public data, and the second public packet comprises the second public data. When the first public packet is transmitted to the i-th child node, since node data to be added by the i-th child node is too large-sized to support the i-th child node to add all of the node data to the idle fields in the first public packet in this case, the i-th child node segments the first node data into at least two segments of the first node data, and adds the first portion of the at least two segments of the first node data to the idle fields in the current first public packet. The first public packet continues to be transmitted to the termination node along the first direction in the network. In this case, the first public packet comprises the first public data and the first portion of the at least two segments of the first node data added by the child node i. When the termination node continues to transmit the second public packet to the i-th child node along the first direction, the i-th child node then fills the remaining second portion of the at least two segments of the first node data in idle fields in the second public packet. It should be understood that the idle fields in the second public packet may also be obtained in the steps 111 and 140. The second public packet continues to be transmitted to the termination node along the first direction in the network. In this case, the second public packet comprises the second public data and the second portion of the at least two segments of the first node data of the child node i. After receiving the first public packet comprising the first portion of the at least two segments of the first node data of the child node i and the second public packet comprising the second portion of the at least two segments of the first node data of the child node i, the termination node combines the first portion of the at least two segments of the first node data and the second portion of the at least two segments of the first node data into the complete first node data.

It should be understood that the node data of the child node i may need to be segmented into a plurality of segments. In an embodiment of the present disclosure, example description is provided only in a case where the node data of the child node i is segmented into a first segment of the first node data and a second segment of the first node data. If the node data of the child node i is segmented into a plurality of segments, the plurality of node data segments are added to idle fields in a business packet among the plurality of business packets respectively, until the plurality of node data segments are completely added and finally combined by the termination node.

Therefore, the segmenting node data and accommodating the segmented node data in different business packets for batchwise transmission in the above steps can completely transmit too large-sized data in the network, and improve the transmission efficiency and latency of such large-sized data.

The steps in the above method 100 involve adding data to the idle fields in the business packet, and the plurality of idle fields have equal length, thereby reducing the configuration complexity of the child nodes, improving the data adding efficiency of the nodes, and featuring simple implementation, high reliability and high data transmission stability.

It should be noted that if the idle fields are not segmented in the steps 111 and 140, that is, the step 123 is not implemented, the step 120 further comprises step 124:
receiving, via the i-th child node, the first public packet, parsing whether the first public packet further comprises an idle portion, and adding, in response to the first public packet comprising the idle portion, the first node data to the first public packet.

When receiving the first public packet, the child node i analyzes whether the first public packet further comprises an idle portion, and adds node data to the first public packet in response to the first public packet further comprising the idle portion. When a plurality of child nodes need to add node data to the first public packet, each child node directly accommodates node data in the first public packet based on actual data size of its own node data. The node data generated by each child node may have equal length.

In the step 124, each child node can add node data based on specific situation of the current first public packet, thereby making more effective use of the bandwidth and improving the bandwidth utilization. However, compared with the step of adding node data to the idle field, the data transmission in the step 124 exhibits slightly poor reliability and low network transmission stability.

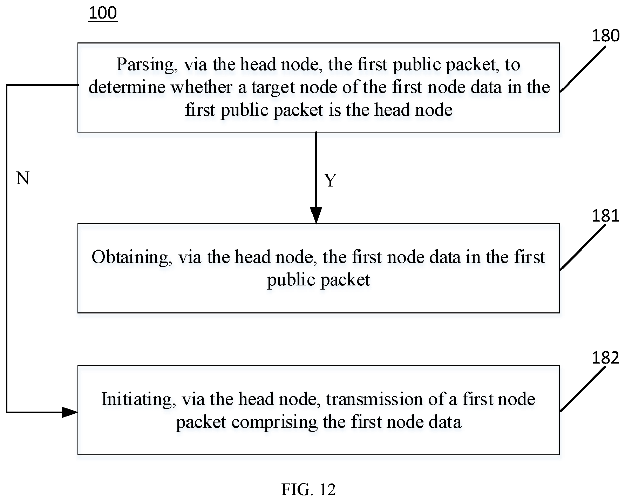

Further, in the step 130, if the termination node is the head node, the first public packet is transmitted to the head node through the N nodes in the first direction, that is, after the step 130, as shown in FIG. 12, the method 100 may further comprise step 180:
Step 180: parsing, via the head node, the first public packet, to determine whether a target node of the first node data in the first public packet is the head node.

Specifically, after receiving the first public packet carrying the first node data, the head node parses and determines whether the target node of the first node data is the head node. It should be understood that the first public packet may carry node data of a plurality of child nodes, and is parsed and determined by the head node. In an embodiment of the present disclosure, example description is provided only with the first node data as an example. Optionally, the first node data may further comprise first addressing information for indicating the target node of the first node data. It should be understood that node data added by each node may carry addressing information for indicating a target node of the node data. The target node may be the head node or may be any other child node. Not only may the head node determine whether the target node of the node data is the head node based on the addressing information, but also any other child node may know whether the target node of the node data is itself based on the addressing information.

If the target node of the first node data in the first public packet is the head node, step 181 is implemented: step 181: obtaining, via the head node, the first node data in the first public packet.

If the target node of the first node data in the first public packet is not the head node, step 182 is implemented: step 182: initiating, via the head node, transmission of a first node packet comprising the first node data.

Specifically, if the target node of the node data is not the head node, but is an m-th child node among the N nodes, the head node accommodates the node data whose target node is the child node m in the first node packet, and transmits the first node packet to the child node m in the first direction or the second direction, wherein m is less than N.

Optionally, the first node packet may further comprise third public data, that is, the first node packet may be regarded as a third public packet, and the third public data is public data. The related processes of processing the first public packet in the above steps 110, 111, 140, 120, and 130 may still be implemented during the transmission of the first node packet, and will not be repeated here, for the sake of brevity. The first node packet may not comprise the third public data, but may comprise, e.g., other non-public data. The present disclosure does not impose any limitation on specific functions and forms of the first node packet.

The step 180, 181, or 182 shown in FIG. 12 can support the requirements for data transmission of each child node, so that data added by the child node can be received by any node, that is, the data added by the child node may be received by the head node, or may be received by any other child node, thereby improving data flexibility of the network data, and satisfying various data transmission requirements.

Further, in the step 130, if the termination node is the head node, that is, when the method 100 is applied to the ring network system shown in FIG. 2 or 3, and in the step 120, if the target node of the first node data added by the i-th child node is the m-th child node, and i is greater than m in the first direction, the method 100 may further comprise:
Step 190: receiving, via the i-th child node, a fourth public packet transmitted from the head node in the second direction, and adding first node data to the fourth public packet.

That is to say, if the i-th child node would like to transmit the first node data to the m-th child node, and in the first direction, i is greater than m, the i-th child node may implement the transmission following the steps 120, 180, and 182, or directly through the step 190. The i-th child node may be configured to follow the transmission priority principle, determine which transmission path is closer, and then choose one of the two manners to transmit the first node data to the m-th child node. It should be understood that for the i-th child node, transmission in the first direction and the second direction may occur concurrently, which means that the i-th child node can arbitrarily choose to add the first node data to the first public packet transmitted in the first direction or the fourth public packet transmitted in the second direction.

The above step 190 can more flexibly support the scenario of mutual data transmission among child nodes, and reduce the data transmission latency among the child nodes.

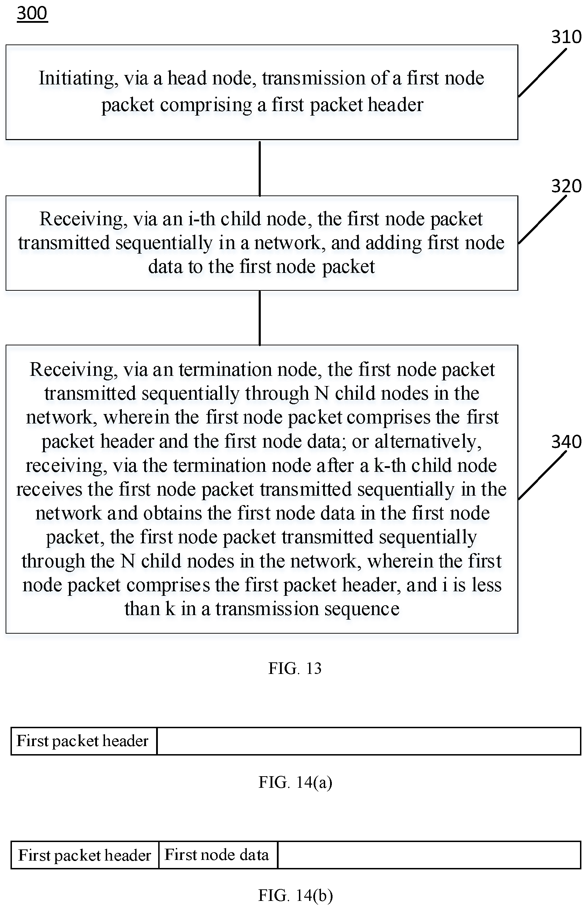

An embodiment of the present disclosure further provides a method 300 for data transmission. The method 300 for data transmission shown in FIG. 13 may also be applied to data transmission in the ring network system shown in FIG. 2 or 3 or in the network system shown in FIG. 4 or 5, thereby supporting addition of new data via any child node to a data packet initiated by the start node or obtainment of data from a data packet transmitted in the network based on configuration and actual application requirements during the transmission of the data packet in the network. Further, a given data packet may carry different types of data simultaneously, thus forming more flexible network data transmission, improving the data transmission efficiency and bandwidth, reducing the data transmission latency, and reducing the network costs compared to the prior art.

It should be noted that data transmitted in the method and the system provided in an embodiment of the present disclosure may comprise public data and non-public data. The public data is, for example, publicly transmitted data such as audio data or broadcast data, that is, the public data refers to data that is publicly transmitted among the nodes in the network and can be received or processed by a plurality of nodes. The non-public data is, for example, non-publicly transmitted data such as configuration data, read data, interrupt data, control data, command data, radar data, video data, image data, sensing data, and vehicle management data, that is, the non-public data refers to any data except for the public data, and represents data that is not publicly transmitted among the nodes in the network and is only received or processed by a designated target node.

As shown in FIG. 13, the method 300 comprises some or all steps below:
Step 310: initiating, via a start node, transmission of a first node packet comprising a first packet header.

Specifically, the first packet header is a public header of a data packet in network data transmission, and may be used to indicate real-time information of each node. It should be noted that in the step 310, the first node packet may only comprise the first packet header, and the head node may not add any data to the first node packet. As shown in FIG. 14(a), the first node packet initiated by the start node comprises the first packet header. It should be noted that when the method 300 is applied to the ring network shown in FIG. 2 or 3, the start node is the head node, the termination node is the head node, the first direction is the clockwise transmission direction shown in the figure, and the second direction is opposite to the first direction, that is, the counterclockwise transmission direction shown in the figure. For example, the head node sends the first node packet to the N child nodes in the ring network system in the first direction, that is, the clockwise direction shown in the figure. When the method 300 is applied to the network shown in FIG. 4 or 5, the start node is the head node and the termination node is a last child node of the network link, or the start node is the last child node of the network link or the termination node is the head node, the first direction is a direction of transmitting data from the head node to the child nodes, and the second direction is, opposite to the first direction, a direction of transmitting data from the child nodes to the head node. It should be understood that in the step 310, if the start node is the head node and the termination node is the head node, the start node may initiate transmission of the first node packet in the first direction or the second direction; if the start node is the head node and the termination node is the last child node, the start node initiates transmission in the first direction; or if the start node is the last child node and the termination node is the head node, the start node initiates transmission in the second direction.

Step 320: receiving, via an i-th child node, the first node packet transmitted sequentially in a network, and adding first node data to the first node packet.

In the step 320, the i-th child node receives the first node packet transmitted sequentially in the network, and adds the first node data to the first node packet. The first node data may be generated by the i-th child node itself, or may be generated by a peripheral device connected to the i-th child node. The first node data may be any public data or non-public data, public data. The embodiments of the present disclosure do not impose any limitation on specific contents and functions of the first node data.

Step 340: receiving, via an termination node, the first node packet transmitted sequentially through N child nodes in the network, wherein the first node packet comprises the first packet header and the first node data; or alternatively, receiving, via the termination node after a k-th child node receives the first node packet transmitted sequentially in the network and obtains the first node data in the first node packet, the first node packet transmitted sequentially through the N child nodes in the network, wherein the first node packet comprises the first packet header, and i is less than k in a transmission sequence.

In the step 340, the termination node receives the first node packet transmitted from the N child nodes in the network, as shown in FIG. 14(b). In this case, the received first node packet comprises the first packet header and the first node data added by the i-th child node; or, during the transmission of the first node packet, the k-th child node obtains the first node data in the first node packet after receiving the first node packet, and when the first node packet is finally received by the head node, the first node packet does not comprise the first node data.

Further, if the method 300 is applied to the network system shown in FIG. 3 or 5, that is, the ring network system further comprises a branch child node, and when the branch child node is involved in data transmission in the ring network, the method 300 may comprise a step below concurrently with the step 320:
Step 321: sending, via the i-th child node, the first node packet to a branch child node of the i-th child node, wherein the branch child node of the i-th child node is only connected to the i-th child node.

Or, before the step 320, the method may further comprise:
Step 322: sending, via the branch child node of the i-th child node, the first node data to the i-th child node, wherein the branch child node of the i-th child node is only connected to the i-th child node.

Reference may be made to the steps 121 and 122 in the method 100 for specific processes of the step 321 and 322, which will not be repeated here, for the sake of brevity.

In an optional embodiment, in the step 310 of method 300, the first node packet sent from the head node may further comprise first target data, which may be received by a j-th child node or a branch child node of the j-th child node during the transmission, or may be finally received by the termination node.

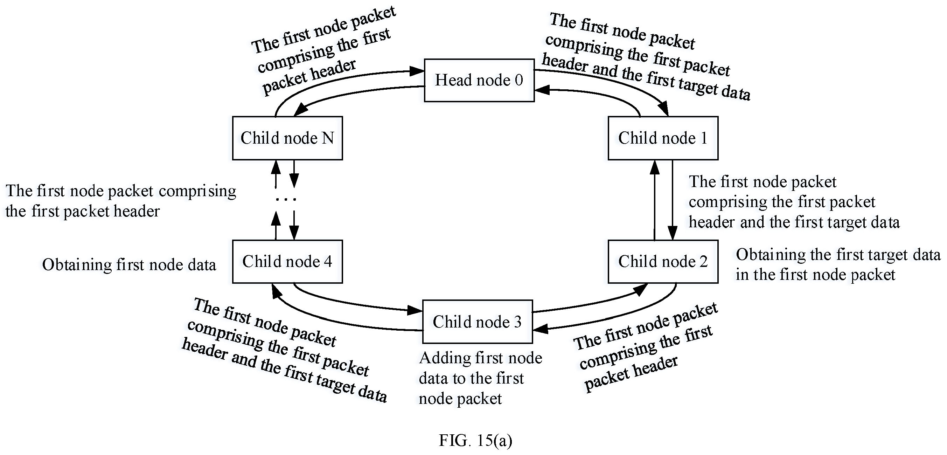

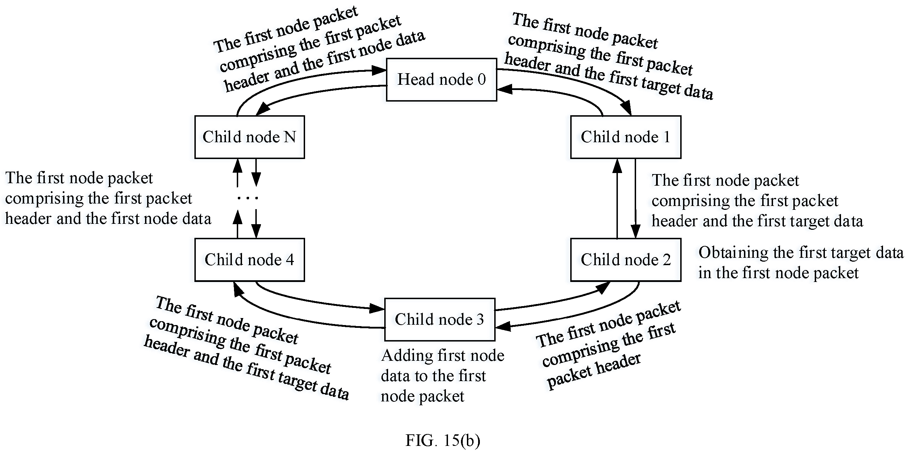

For example, when a target node of the first target data is the j-th child node or the branch node of the j-th child node, wherein j is less than N, specifically, as shown in FIG. 15(a) or 15(b), the head node 0 initiates transmission of the first node packet in the first direction, wherein the first direction is the clockwise direction in the ring network as shown in FIG. 15(a) or 15(b). It should be understood that the first direction may also be the counterclockwise direction in the ring network as shown in FIG. 15(a) or 15(b). In this case, the first node packet further comprises first target data, and the target node of the first target data is the j-th child node or the branch child node of the j-th child node. That is to say, the first target data will be obtained by the j-th child node or the branch child node of the j-th child node. Optionally, the first target data may comprise first addressing information for indicating the target node of the first target data, that is, which node receives the first target data. The first addressing information may be set as a packet header of the first target data. The present disclosure does not impose any limitation on specific data forms of the first addressing information. The first target data may be generated by the start node itself, or may be generated by a peripheral device connected to the start node. When the start node is the head node, the first target data may be generated by a host connected to the head node. The first target data may be any public data or non-public data, such as public data generated by a node or a peripheral device connected to the node, or non-public data such as node register data, node interrupt data and any non-public data generated by a node itself or a peripheral device. The embodiments of the present disclosure do not impose any limitation on specific contents and functions of the first target data. Public data public data

It should be noted that if the target node of the first target data is the termination node, that is, if the target node of the first target data is not a child node or a branch node connected to a child node, the first target data may not carry the first addressing information and is finally transmitted to the termination node through the network.

If the first node packet further comprises the first target data and the target node of the first target data is the j-th child node, before the step 340, the method 300 further comprises:
Step 330: receiving, via a j-th child node, the first node packet and obtaining the first target data in the first node packet.

In the step 330, the first node packet carrying the first target data is transmitted sequentially in the network transmission direction and received by the j-th child node. Since the target node of the first target data is the j-th child node, the j-th child node receives the first node packet and obtains the first target data in the first node packet. It should be understood that the steps 320 and 330 may be implemented by a given node, that is, the j-th child node may be the i-th child node, and j is equal to i. Further, if the steps 320 and 330 are implemented by different child nodes, the embodiments of the present disclosure do not impose any limitation on the sequence of implementation of the steps 320 and 330.

If the first node packet further comprises the first target data and the target node of the first target data is the branch child node of the j-th child node, after the step 321 and before the step 340, the method 300 further comprises:
Step 331: receiving, via a branch child node of the j-th child node, the first node packet and obtaining the first target data in the first node packet. It should be understood that in the first direction, the steps 320 and 330 may be implemented by a given child node, or may be implemented by different child nodes, that is, i may be equal to j.

Here are 3 example transmission flow charts when the first node packet in the step 310 of the above method 300 further comprises the first target data and is applied to the ring network system shown in FIG. 2 or 3. As shown in FIG. 15(a), the head node 0 initiates the transmission of the first node packet in the first direction, i.e., the clockwise direction of the ring network shown in the figure. The first node packet comprises the first packet header and the first target data. The target node of the first target data is the child node 2. After transmission through 2 child nodes, the first node packet is received by the second child node, i.e., the child node 2. The child node 2 implements the step 330, i.e., the child node 2 obtains the first target data in the first node packet, and then the child node 2 continues to transmit the first node packet, comprising the first packet header and the first node data, in the ring network. When the first node packet is transmitted to the child node 3, the child node 3 implements the step 320, that is, adds the first node data to the first node packet. The target node of the first node data is a child node 4. Then, the child node 3 transmits the first node packet, comprising the first packet header and the first node data, to a next node, i.e., the child node 4, along the first direction. The child node 4 obtains the first node data in the first node packet. In this case, the first node packet comprises the first packet header, but does not comprise the first node data. The first node packet comprising the first packet header continues to be transmitted along the first direction, and is finally transmitted to the head node 0. The head node 0 receives the first node packet transmitted through all child nodes, i.e., the N child nodes. In this case, the first node packet comprises the first packet header, but does not comprise the first target data or the first node data.

As shown in FIG. 15(b), FIG. 15(b) differs from FIG. 15(a) in that, in FIG. 15(b), the first node data added by the child node 3 is finally received by the head node 0, and the first node packet received by the head node 0 comprises the first packet header and the first node data, but does not comprise the first target data.

It should be understood that in the above embodiments shown in FIG. 15(a) or 15(b), in the step 310, the first node packet may further comprise a plurality of target data, such as first target data or second target data, the target node of the first target data is the j-th child node, and the target node of the second target data is, for example, the i-th child node. The embodiments of the present disclosure do not impose any limitation on the number of target data in the first node packet, and example description is provided only in a case where the target node is the j-th child node as an example. The step 320 may be implemented repeatedly, that is, a plurality of nodes may add corresponding node data to the first node packet. For example, the i-th child node adds the first node data, and the k-th child node adds the second node data. In an embodiment of the present disclosure, example description is provided only with the i-th child node as an example.

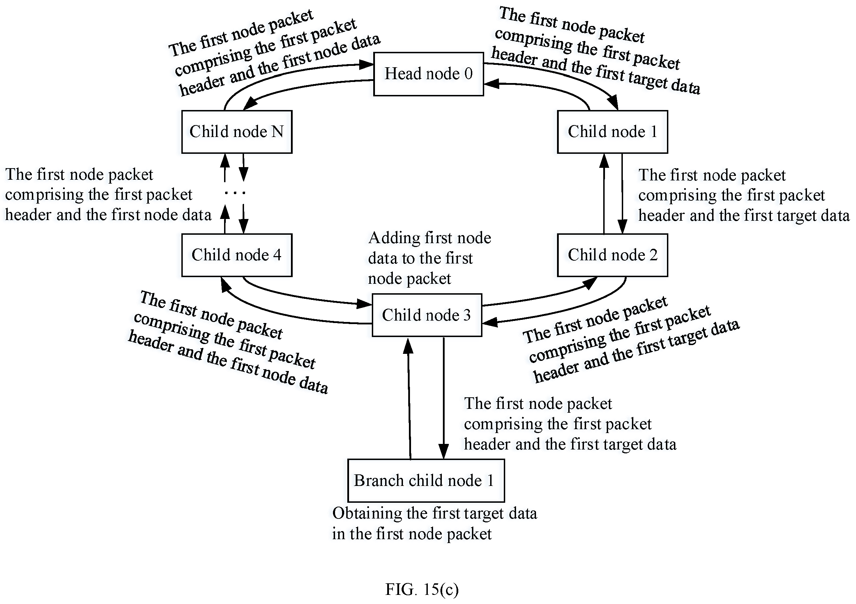

Or, further, if the method 300 is applied to the network system carrying a branch child node as shown in FIG. 3, and when the branch child node implements the step 331, for example, as shown in FIG. 15(c), the first node packet initiated by the head node 0 comprises the first packet header and the first target data, and the target node of the first target data is the branch child node 1. Then, during the transmission along the first direction, when the first node packet is transmitted to the child node 3 connected to the branch child node 1, the child node 3 concurrently implements the steps 320 and 321, that is, the child node 3 transmits the first node packet to the branch child node 1, and adds the first node data to the first node packet. The first node data is generated by the child node 3 or the peripheral device connected to the child node 3. Then, the first node packet carrying the first packet header and the first node data continues to be sent to the next child node along the first direction, and is finally sequentially transmitted to the head node 0. After receiving the first node packet sent from the child node 3, the branch child node 1 implements the step 331, that is, obtains the first target data in the first node packet. It should be understood that the child node 3 concurrently implements the steps 320 and 321 without mutual interference, a plurality of branch child nodes may be present, and the plurality of branch child nodes can each implement the step 321, or before the child node 3 implements the step 320, the branch child node implements the step 322, the first node data generated by the branch child node or the peripheral device connected to the branch child node is first sent to the child node 3, and then the child node 3 implements the step 322, that is, adding the first node data to the first node packet and then transmitting it to the head node through the ring network. In an embodiment of the present disclosure, the child node 3 implements the step 320 and the branch child node 1 implements the steps 321 and 331, which are only taken as an example.

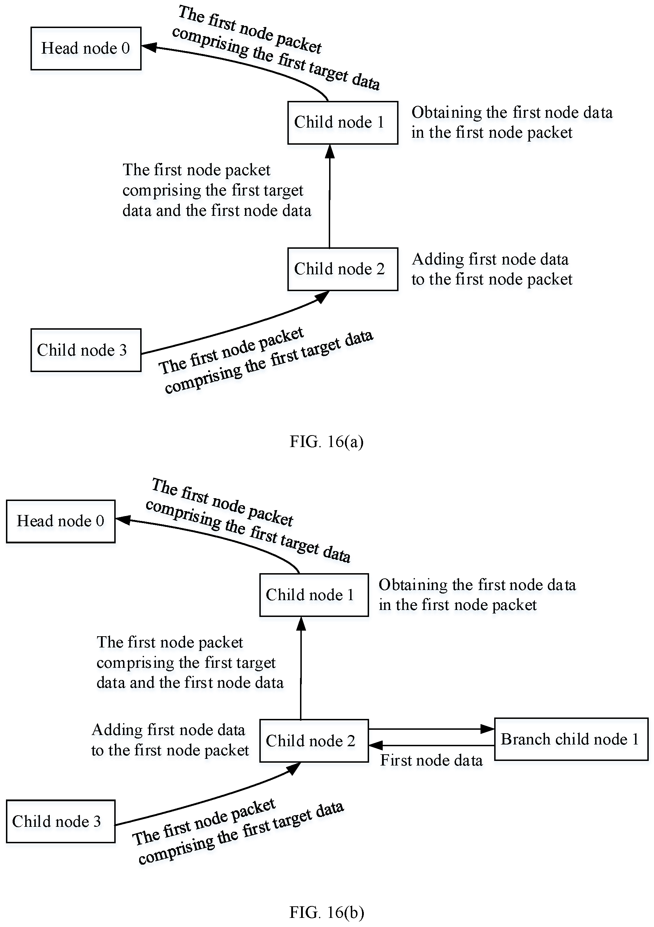

Here are 2 example transmission flow charts when the first node packet in the step 310 of the above method 300 further comprises the first target data and is applied to the network system as shown in FIG. 4 or 5, and as an example, the start node is the last child node and the termination node is the head node. It should be understood that when the step 310 is implemented, the first node packet may only comprise the first packet header, but does not comprise other data. This example transmission flow chart is introduced with the first link in the network shown in each of FIGS. 4 and 5 as an example. As shown in FIG. 16(a), in the network, the head node 0, the child node 1, the child node 2, and the child node 3 form a serial network link. It should be understood that in this serial network link, data initiated by the head node will be transmitted sequentially through the child nodes 1, 2, and 3, and data initiated by the child node 3 will be transmitted sequentially through the child node 2, the child node 1, and the head node 0.

The child node 3 serves as the last child node of the link. The child node 3 initiates transmission of the first node packet comprising the first target data. Then, the child node 3 transmits the first node packet to the child node 2. After receiving the first node packet, the child node 2 adds the first node data to the first node packet. The target node of the first node data is the child node 1. The child node 3 sends the first node packet carrying the first target data and the first node data to the child node 1. Since the target node of the first node data is the child node 1, the child node 1 receives the first node packet and obtains the first node data therein. In this case, the first node packet does not comprise the first node data. The child node 1 then continues to send the first node packet carrying the first target data to the head node 0, so that the first node packet is received by the head node 0. Optionally, the target node of the first node data may not be the child node 1, but the first node data may be received by the head node 0. The target node of the first target data may also be a child node such as the child node 2, and the first node packet received by the head node does not comprise the first target data. Optionally, the child node 1 may also obtain the first target data in the first node packet, and additionally add node data to the first node packet.

Or, further, if the method 300 is applied to a system carrying a branch child node as shown in FIG. 5, as shown in FIG. 16(b), in this network, the head node 0 and the child nodes 1, 2, and 3 form a serial network link. In addition, the child node 2 is further connected to the branch child node 1. The branch child node 1 only communicates with the child node 2, when being involved in transmission. The child node 3, as the last child node of the link, initiates the transmission of the first node packet comprising the first target data. The child node 3 then transmits the first node packet to the child node 2. Before the child node 2 implements the step 320, the branch child node 1 sends the first node data to the child node 2. This first node data is generated by the branch child node 1 or the peripheral device connected to the branch child node 1. Then, the child node 2 implements the step 320, and adds the first node data to the first node packet. In this case, the first node packet comprises the first target data and the first node data. The first node packet continues to be transmitted to the next node, namely the child node 1. Since the target node of the first node data is the child node 1, the child node 1 receives the first node packet and obtains the first node data in the first node packet. In this case, the first node packet does not comprise the first node data. The child node 1 then continues to send the first node packet carrying the first target data to the head node 0, so that the first node packet is received by the head node 0.

Therefore, the above method 300 can support that during transmission of a data packet in the network, any child node may add new data to the data packet initiated by the start node based on configuration and actual application requirements, or obtain data in the data packet in the network, and a given data packet may carry data of a plurality of types, to form more flexible ring network data transmission, improve the data transmission efficiency and bandwidth, and reduce the data transmission latency. If the method 300 further comprises the steps 321, 322, and 331 involving branch child nodes, it can further reduce the wiring of the network, and reduce the costs of the overall network system.

In an optional embodiment, in the step 310 of the ring network transmission, the first node packet sent from the start node may further comprise a public data field, the first node data comprises first public data and/or first non-public data, and the first target data may further comprise second public data and/or second non-public data. That is to say, optionally, in order to facilitate transmission management of data of different types, thereby improving the data transmission stability, node data added by a child node and the first target data initiated by the start node are subsegmented into public data and non-public data. For example, the first node data added by the i-th child node comprises the first public data, and the first target data initiated by the start node comprises the second non-public data. It should be noted that the public data is, for example, publicly transmitted data such as audio data or broadcast data, that is, the public data refers to data that is publicly transmitted among the nodes in the network and can be received or processed by a plurality of nodes. The non-public data is, for example, non-publicly transmitted data such as configuration data, read data, interrupt data, control data, command data, radar data, video data, image data, sensing data, and vehicle management data, that is, the non-public data refers to any data except for the public data, and represents data that is not publicly transmitted among the nodes in the network and is only received or processed by a designated target node. It should be understood that the first node data added by the i-th child node may comprise both the first public data and the first non-public data, or may only comprise the first public data, and the first target data initiated by the start node may comprise both the second public data and the second non-public data, or may only comprise the second non-public data. The first node packet initiated by the head node comprises a public data field. It should be understood that before public data is added, the public data field is invalid data, for example, may be blank, and after public data is added, the public data field comprises valid data. When the first node packet initiated by the head node further comprises the public data field, the first packet header may further comprise indicator size information for indicating size of the public data field, which is helpful for a child node to identify a start position of other data beyond the public data field, so that the child node can quickly identify and obtain data required by itself.

Subsegmenting node data into public data and non-public data is conductive to transmission management of data of different types, thereby improving the data transmission stability.

When the first node packet initiated by the start node for transmission comprises the public data field, the first node packet comprises the first target data, and the first target data comprises the second public data, the step 310 comprises:
Step 312: initiating, via the start node, transmission of the first node packet comprising the first target data and the public data field, the first target data comprising the second public data, the public data field being used to accommodate the second public data.

It should be understood that in the step 312, the first target data may further comprise the second non-public data. However, only the second public data can be accommodated in the public data field. In this case, the public data field may be filled up with the second public data, or may, after being filled with the second public data, retain a spare portion for accommodating public data of other child nodes.

When the first node packet initiated by the start node for transmission comprises the public data field and the first node data comprises the first public data, the step 320 in the method 300 comprises:
Step 323: receiving, via the i-th child node, the first node packet, and adding the first public data to the public data field in the first node packet.

Specifically, in the step 323, since the first node data comprises the first public data, the i-th child node adds the first public data to the public data field in the first node packet. After the addition, it should be understood that in this case, the public data field comprises valid data.

In the above step 320, public data is added to the public data field, which enables better centralized transmission of the public data, and features simple implementation and controllable transmission latency of the public data.

Further, in an optional embodiment, in the step 310, the method 300 further comprises:
Step 311: segmenting, via the start node, an idle portion in the first public packet into one or more idle fields of equal length.

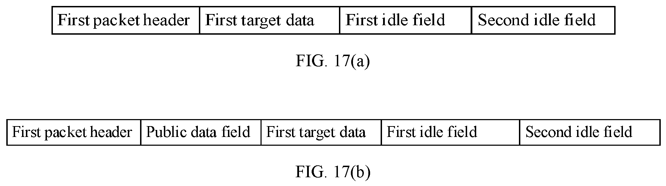

In the step 311, as shown in FIG. 17(a), if the first node packet only comprises the first target data, an idle portion in the first node packet except for the first target data is segmented into one or more idle fields, such as a first idle field and a second idle field, and the first idle field and the second idle field have equal length; and as shown in FIG. 17(b), if the first node packet only comprises the public data field and the first target data, and the first target data only comprises non-public data, an idle portion in the first public packet except for the public data field and the first target data is segmented into one or more idle fields, and if the idle portion is segmented into a plurality of idle fields, the plurality of idle fields have equal length. It should be understood that if the first target data comprises the second public data, the second public data may be accommodated in the public data field.

In an optional embodiment, in the step 330, the method 300 further comprises:
Step 332: receiving, via the j-th child node, the first node packet, obtaining the first target data in the first node packet, and marking a field corresponding to the first target data as an idle field.

Specifically, after receiving the first node packet, the j-th child node obtains the first target data in the first node packet, and marks the field corresponding to the first target data as an idle field, so that the first node packet can have more idle fields for adding new data.

In particular, if the target node of the first target data is the branch child node of the j-th child node, the j-th child node receives the first node packet, marks the field corresponding to the first target data in the first node packet as the idle field and transmits the first node packet to a next node. At the same time, the j-th child node implements the step 321, so that the branch child node of the j-th child node obtains the first target data. Because the first target data is invalid data for the transmission through remaining nodes in the first direction, the field corresponding to the first target data may be marked as the idle field and thus be used to add new data.

Further, in the step 340, the method may further comprise:
Step 341: receiving, via the k-th child node, the first node packet, obtaining the first target data in the first node packet, and marking the field corresponding to the first target data as the idle field.

It should be understood that the j-th child node and the k-th child node may be a given node, or may be different nodes. Reference may be made to the step 311 for implementation of the step 341, which will not be repeated here.

Therefore, in the step 311 and/or the step 332 and/or the step 341, the first node packet may comprise idle fields, and a plurality of the idle fields have equal length, so that each child node can more quickly identify whether an idle bandwidth remains available in the first node packet for adding new data, thereby improving the data adding efficiency of the child nodes, reducing the configuration complexity of the child nodes, and featuring simple implementation.

After implementation of the step 311 and/or the step 332 and/or the step 341, the first node packet comprises an idle field. Therefore, during the implementation of the step 320, the step 320 may comprise:
Step 324: receiving, via the i-th child node, the first node packet, and adding the first node data to the idle field in the first node packet.

Or, if the first node data comprises the first non-public data, the method 300 may further comprise:
Step 325: receiving, via the i-th child node, the first node packet, and adding the first non-public data to the idle field in the first node packet.

If node data is segmented into public data and non-public data, when the node data is added, the public data is added to the public data field, the and non-public data is added to the idle field, that is, data of different types is added to different fields, thereby contributing to the data transmission management, and improving the network data transmission stability. After implementation of the step 311 and/or the step 332 and/or the step 341 for the public data, the first node packet comprises an idle field, and then each child node may add its node data to be transmitted in the network to the idle field in the first node packet. If node data is not segmented into public data and non-public data, the step 324 is implemented: adding, via the child node, the node data to the idle field in the first node packet; if node data is segmented into public data and non-public data, the step 325 is implemented: adding, via the child node, the non-public data in the node data to the idle field in the first node packet, and the step 323 implemented: adding, via the child node, the public data in the node data to the public data field in the first node packet. It should be understood that the steps 323 and 325 are not sequentially implemented, the step 323 may be first implemented, or the step 325 may be first implemented, and a plurality of child nodes may be available for implementing the steps 323 and 325 respectively.

The above steps 311, 332, and 341 may all exist, or only the step 311 or 332 or 341 may exist. If the step 324 or 325 is implemented, the step 311 and/or the step 332 and/or the step 341 must be first implemented.

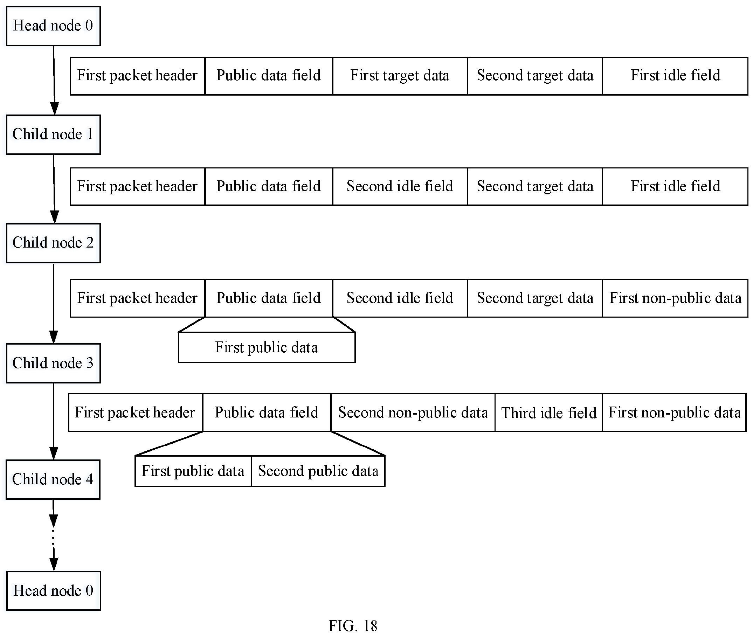

It should be understood that during the transmission of the first node packet in the first direction, the process of obtaining data via a child node and marking an idle field in the steps 332 and 341 and the process of adding node data via a child node in the steps 323, 324, and 325 may occur repeatedly, which is not limited in the present disclosure. Specifically, the present disclosure provides an example process 400 of the above method 300. The example process 400 is an example flow chart in which the method 300 is applied to the ring network shown in FIG. 2 or 3. FIG. 18 is a schematic diagram of data transmission corresponding to the example process 400. In this example process 400 and the corresponding schematic diagram FIG. 18 of data transmission, node data is segmented into public data and non-public data, and the first target data only comprises non-public data. In the example process 400, the above steps 310, 311, 323, 332, and 325 are implemented.

Specifically, the process 400 comprises steps below:
Process 401: sending, via a head node 0, a first node packet in a first direction, the first node packet comprising a first packet header, a public data field, a first target data, a second target data, and a first idle field.

The target node of the first target data is the child node 1, the target node of the second target data is the child node 3, and the first idle field is the idle field segmented in the step 311. Optionally, when the first node packet sent from the head node has a too large data size, leaving no spare space for idle field segmenting, no idle field may be present, that is, the step 311 is not implemented.

Process 402: receiving, via a child node 1, the first node packet, obtaining the first target data in the first node packet, and marking a field corresponding to the first target data as an idle field, that is, a second idle field.

Specifically, since the target node of the first target data is the child node 1, when the first node packet is transmitted to the child node 1, the child node obtains the first target data and implements the step 332.

Process 403: receiving, via a child node 2, the first node packet, first node data of the child node 2 comprising first public data and first non-public data, adding, via the child node 2, the first public data to the public data field, and adding the first non-public data to the first idle field.

Optionally, the first non-public data may also be added to the second idle field, that is, the first non-public data may be added to any idle field except for the public data field.

Process 404: receiving, via a child node 3, the first node packet, obtaining the second target data in the first node packet, and marking the second target data as a third idle field, second node data of the child node 3 comprising second public data and second non-public data, adding, via the child node 3, the second public data to the public data field, and adding the second non-public data to the second idle field. In this case, the first node packet comprises the first public data, the second public data, the second non-public data, the third idle field, and the first non-public data. The child node 3 continues to transmit the first node packet to a next node along the first direction.

In the process 404, the child node 3 concurrently implements the steps 323, 351, and 332. After the process 404, the first node packet comprises the first public data, the second public data, the second non-public data, the third idle field, and the first non-public data.

Process 405: sequentially transmitting the first node packet comprising the first public data, the second public data, the second non-public data, the third idle field, and the first non-public data among remaining child nodes in the first direction, finally transmitting the first node packet to the head node 0, and receiving the first node packet via the head node 0.

Further, when the step 324 or 351 is implemented, node data of a node may have a too large data size to be accommodated in a single idle field or all idle fields, wherein the node data may only comprise non-public data, and the step 324 may further comprise:
Step 3241: segmenting, via the i-th child node, the first node data, so that the first node data comprises at least two segments of the first node data.

When the node data of the node can be accommodated in a plurality of idle fields in a current first node packet, the step 324 comprises:
Step 3242: adding, via the i-th child node, the at least two segments of the first node data to a plurality of the idle fields in the first node packet respectively.

If all of the idle fields in the current first node packet fail to accommodate the node data of the node, the step 324 comprises: step 3243: adding, via the i-th child node, a first portion of each of the at least two segments of the first node data to the idle fields in the first node packet respectively.

Further, the method 300 further comprises steps 361, 362, and 363:
Step 361: initiating, via the start node, transmission of a second node packet comprising a second packet header.
Step 362: receiving, via the i-th child node, the second node packet comprising an idle field, and adding, via the i-th child node, a second portion of the at least two segments of the first node data to the idle field of the second node packet.
Step 363: receiving, via the termination node, the first node packet and the second node packet, and combining the first portion of the at least two segments of the first node data and the second portion of the at least two segments of the first node data into the first node data.

Reference may be made to the relevant description of the steps 1231, 1232, 1233, 150, 160, and 170 in the above method 100 for specific processes and description of the above steps 3241, 3242, 3243, 361, 362, and 363, which will not be repeated here, for the sake of brevity.

Therefore, the segmenting node data and accommodating the segmented node data in different node packets for batchwise transmission in the above steps can completely transmit too large-sized data in the network, and improve the transmission efficiency and latency of such large-sized data.

Similarly, if the node data comprises public data and non-public data, the above operation on the first node data may be implemented only on the non-public data, which will not be repeated here, for the sake of brevity.

It should be noted that if the idle fields are not segmented in the steps 311 and 323, that is, the steps 324 and 325 are not implemented, the step 320 may comprise:
Step 326: receiving, via the i-th child node, the first node packet, parsing whether the first node packet further comprises an idle portion, and adding, in response to the first node packet further comprising the idle portion, the first node data to the first node packet.

Or, when the first node data comprises the first non-public data, the step 320 may comprise:
Step 327: receiving, via the i-th child node, the first node packet, parsing whether the first node packet further comprises an idle portion, and adding, in response to the first node packet further comprising the idle portion, the first non-public data to the first node packet.

That is to say, when receiving the first node packet, the child node i analyzes whether the first node packet further comprises an idle portion, and adds, in response to the first node packet further comprising the idle portion, the first node data or the first non-public data among the first node data to the first node packet. When a plurality of child nodes need to add node data or non-public data to the first node packet, each child node directly accommodates its own node data or non-public data in the first node packet based on actual data size of its own node data or non-public data. The node data or non-public data generated by each child node may have unequal lengths.

In the step 326 or 327, each child node can add node data based on specific situation of the current first node packet, thereby making more effective use of the bandwidth and improving the bandwidth utilization. However, compared with the step of adding node data to the idle field, the data transmission in the step 326 or 327 exhibits slightly worse reliability and low network transmission stability.

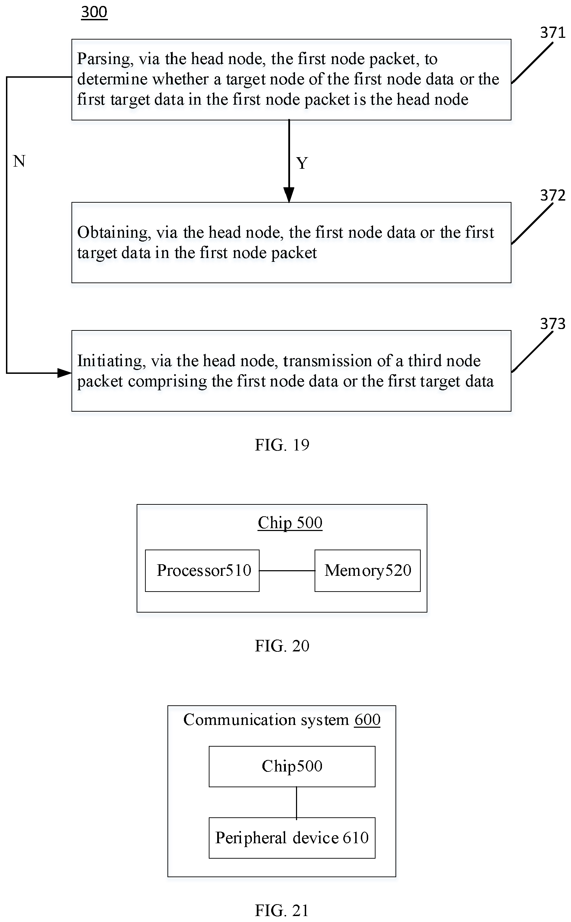

Further, in the method 300, when the start node is the head node and the termination node is also the head node, in the network transmission direction, when the first node data or the first target data is transmitted through the N nodes to the head node 0, that is, after the step 340, as shown in FIG. 19, the method 300 may further comprise:
Step 371: parsing, via the head node, the first node packet, to determine whether a target node of the first node data or the first target data in the first node packet is the head node.

Specifically, the first target data may comprise the first addressing information for indicating a receiving node of the first target data, and the first node data may comprise second addressing information for indicating the target node of the first node data. It should be understood that the first target data initiated by the start node, and the node data added by each node may carry addressing information for indicating the target node of the node data. The target node may be the head node or may be any other child node. Not only may the head node determine whether the target node of the node data is the head node based on the addressing information, but also any other child node may know whether the target node of the node data is itself based on the addressing information.

If the target node of the first node data or the first target data in the first node packet is the head node, the step 372 is implemented: obtaining, via the head node, the first node data or the first target data in the first node packet.

If the target node of the first node data or the first target data in the first node packet is not the head node, step 373 is implemented: initiating, via the head node, transmission of a third node packet comprising the first node data or the first target data.

Or, in case of application to the network system shown in FIG. 4 or 5, and when the network system comprises two transmission links simultaneously, that is, the first link and the second link transmit data simultaneously, the two links are connected through the head node, and in this case, the start node is the last child node, and the termination node is the head node. When the first node data or the first target data is transmitted to the head node 0 through the N nodes, that is, after the step 340, the method 300 may further comprise:
Step 381: parsing, via the head node, the first node packet, to determine whether a target node of the first node data or the first target data in the first node packet is the head node, wherein the first node packet is transmitted to the head node through the first link.

Reference may be to the above description of the step 371 for specific process of the step 381, which will not be repeated here, for the sake of brevity.

If the target node of the first node data or the first target data in the first node packet is the head node, step 382 is implemented: obtaining, via the head node, the first node data or the first target data in the first node packet.

If the target node of the first node data or the first target data in the first node packet is not the head node, step 383 is implemented: initiating, via the head node, transmission of a fourth node packet through a second link, the fourth node packet comprising the first node data or the first target data.

Specifically, for example, in the step 381, the first node data in the first node packet is added by the child node 3 of the first link as shown in FIG. 4, and its target node is the child node 6 of the second link, and the first node packet is first transmitted to the head node 0 through the first link. The head node 0 determines that the first node data thereof is not received by itself but by the child node 6 of the second link, then initiates transmission of the fourth node packet in the second link, and accommodates the first node data in the fourth node packet. Then, the fourth node packet may, when transmitted to the child node 6 in the second link, be received by the child node 6. In this way, nodes between the first link and the second link can transmit data to one another, making the network transmission more flexible.

It should be noted that after data is segmented into public data and non-public data, the public data will be received and obtained by the head node, and the head node can implement the above steps 371 and 373 on the non-public data.

Reference may be made to the relevant processes and descriptions of the steps 180, 181, and 182 in the method 100 for the above processes, which will not be repeated, for the sake of brevity.

The steps shown in FIG. 19 can support the requirements for data transmission of each child node, so that data added by the child node can be received by any node, that is, the data added by the child node may be received by the head node, or may be received by any other child node, thereby improving data flexibility of the network data, and satisfying various data transmission requirements.

Further, if the method 300 is applied to the ring network shown in FIG. 4 or 5, that is, the start node is the head node and the termination node is the head node, in the step 320, the target node of the first node data added by the i-th child node is an m-th child node, i is greater than m in the first direction, and the method 300 may further comprise:
Step 384: receiving, via the i-th child node, a fifth node packet transmitted from the head node in the second direction, and adding the first node data to the fifth node packet.

That is to say, if the i-th child node would like to transmit the first node data to the m-th child node, and in the first direction, i is greater than m, the i-th child node may implement the transmission following the steps 320, 381, and 383, or directly through the step 384. The i-th child node may be configured to follow the priority transmission principle, determine which transmission path is closer, and then choose one of the two manners to transmit the first node data to the m-th child node. It should be understood that for the i-th child node, transmission in the first direction and the second direction may occur concurrently, which means that the i-th child node can arbitrarily choose to add the first node data to the first public packet transmitted in the first direction or the fifth node packet transmitted in the second direction.

The above step 384 can more flexibly support the scenario of mutual data transmission among child nodes, and reduce the data transmission latency among the child nodes.

As shown in FIG. 20, an embodiment of the present disclosure further provides a chip 500. The chip 500 comprises a processor 510 and a memory 520, wherein the processor 510 is configured to invoke and run a computer program stored in the memory 520 to implement any step of the above method 100 or the above method 300. The chip 500 may be the head node or any child node in the method 100 to implement the steps correspondingly implemented by the head node or the child node in the above method 100, or may be the head node or any child node in the method 300 to implement the steps correspondingly implemented by the head node or the child node in the above method 300.

As shown in FIG. 21, an embodiment of the present disclosure further provides a communication system 600. The communication system 600 comprises the chip 500 in FIG. 20 and a peripheral device 610. The chip is connected to and communicates with the peripheral device 610, to support different application scenarios of the network system.

During an implementation, steps in the above method embodiments may be completed by an integrated logic circuit of hardware in the processor or instructions in the form of software. The above processor or processing device may be a general-purpose processor, a digital signal processor (DSP), a microcontroller unit (MCU), a central processing unit, an application specific integrated circuit (ASIC), a field programmable gate array (FPGA) or other programmable logic devices, a discrete gate or transistor logic device, or a discrete hardware component, and can implement or execute the methods, steps, and logical block diagrams disclosed in the embodiments of the present disclosure. The general-purpose processor may be a microprocessor, or the processor may be any conventional processor or the like. The steps of the method disclosed in the embodiments of the present disclosure may be directly embodied as being executed and completed by a hardware decoding processor, or being executed and completed by a combination of hardware and software modules in the decoding processor. The software module may be located in a mature storage medium in the art, such as a random access memory, a flash memory, a read-only memory, a programmable read-only memory or an electrically erasable programmable memory, or a register. The storage medium is located in the memory. The processor reads information from the memory, and completes the steps of the above method in combination with its hardware.

The above memory may be a volatile memory or a non-volatile memory, or may include both a volatile memory and a non-volatile memory. The non-volatile memory may be a read-only memory (ROM), a programmable read-only memory (PROM), an erasable programmable read-only memory (Erasable PROM, EPROM), an electrically erasable programmable read-only memory (Electrically EPROM, EEPROM), or a flash memory. The volatile memory may be a random access memory (RAM), which is used as an external cache. As illustrated by way of example and not by way of limitation, many forms of RAM are usable, such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). As will be appreciated by those of ordinary skills in the art, the example units and algorithm steps described with reference to the embodiments disclosed herein can be implemented by electronic hardware, or by a combination of computer software and electronic hardware. Whether these functions are executed by hardware or software depends on particular applications and design constraints of the technical solutions. Those skilled in the art may implement described functions for each particular application using different methods, but such implementation should not be considered as falling beyond the scope of the present disclosure.

The specific examples in the embodiments of the present disclosure are provided only to help those skilled in the art to better understand the embodiments of the present disclosure, rather than limiting the scope of the embodiments of the present disclosure. Those skilled in the art may make various improvements and modifications on the basis of the above embodiments, and these improvements or modifications are all encompassed within the scope of protection of the present disclosure.

While the above description merely provides specific embodiments of the present disclosure, the scope of protection of the present disclosure is not limited to the specific embodiments. Any person skilled in the art can easily conceive of alterations or replacements within the technical scope disclosed in the present disclosure. All these alterations or replacements should be encompassed within the scope of protection of the present disclosure. Therefore, the scope of protection of the present disclosure should be determined by the scope of protection of the claims.

## Claims

1. A method for transmitting data in a network comprising a head node and N child nodes, where N is an integer greater than 1, the method comprising:
initiating, via the head node, transmission of a first public packet comprising first public data;
receiving, via an i-th child node, the first public packet transmitted sequentially in the network, and adding first node data to the first public packet; and
receiving, via an termination node, the first public packet transmitted sequentially through the N child nodes in the network, wherein the first public packet comprises the first public data and the first node data; or alternatively, receiving, via the termination node after a k-th child node receives the first public packet transmitted sequentially in the network and obtains the first node data in the first public packet, the first public packet transmitted sequentially through the N child nodes in the network, wherein the first public packet comprises the first public data,
wherein i is less than k in a transmission sequence.

2. The method according to claim 1, wherein the termination node is the head node, or the termination node is a last child node among the N child nodes.

3. The method according to claim 1, wherein the network further comprises a branch child node of the i-th child node, and while the i-th child node recieves the first public packet and adds the first node data to the first public packet, the method further comprises: sending, via the i-th child node, the first public packet to a branch child node of the i-th child node, wherein the branch child node of the i-th child node is only connected to the i-th child node.

4. The method according to claim 1, wherein the network further comprises a branch child node of the i-th child node, and prior to the receiving, via the i-th child node, the first public packet and adding first node data to the first public packet, the method further comprises: sending, via the branch child node of the i-th child node, the first node data to the i-th child node, wherein the branch child node of the i-th child node is only connected to the i-th child node, and the first node data is generated by the branch child node of the i-th child node or a peripheral device connected to the branch child node of the i-th child node.

5. The method according to claim 1, wherein the first public packet further comprises first non-public data, the first public data comprises at least one of audio data or broadcast data, and the first non-public data comprises at least one of configuration data, read data, interrupt data, control data, command data, radar data, video data, image data, sensing data, and vehicle management data.

6. The method according to claim 1, wherein the method further comprises:
segmenting, via the head node, an idle portion in the first public packet into one or more idle fields of equal length.

7. The method according to claim 5, wherein the method further comprises:
marking, via an f-th child node after receiving the first public packet transmitted sequentially in the network and obtaining the first non-public data, a field corresponding to the first non-public data as an idle field; or
receiving, via the f-th child node, the first public packet transmitted sequentially in the network, sending the first public packet to a branch child node of the f-th child node, and obtaining, via the branch child node of the f-th child node, the first non-public data in the first public packet, concurrently marking, via the f-th child node, the field corresponding to the first non-public data as the idle field, and then sending the first public packet to a next node connected the f-th child node, the next node being the child node or the termination node.

8. The method according to claim 6 or 7, wherein the adding, via the i-th child node, the first node data to the first public packet comprises:
adding, via the i-th child node, the first node data to the idle field in the first public packet.

9. The method according to claim 8, wherein the adding, via the i-th child node, the first node data to the idle field in the first public packet comprises:
segmenting, via the i-th child node, the first node data, so that the first node data comprises at least two segments of the first node data; and
adding, via the i-th child node, the at least two segments of the first node data to a plurality of the idle fields in the first public packet respectively.

10. The method according to claim 8, wherein the adding, via the i-th child node, the first node data to the idle field in the first public packet comprises:
segmenting, via the i-th child node, the first node data, so that the first node data comprises at least two segments of the first node data; and
adding, via the i-th child node, a first portion of each of the at least two segments of the first node data to the idle field in the first public packet respectively.

11. The method according to claim 10, wherein the method further comprises:
initiating, via the head node, transmission of a second public packet comprising second public data;
receiving, via the i-th child node, the first public packet transmitted sequentially in the network, and adding a second portion of the at least two segments of the first node data to an idle field in the second public packet; and
receiving, via the termination node, the first public packet and the second public packet, and combining the first portion of the at least two segments of the first node data and the second portion of the at least two segments of the first node data into the first node data.

12. The method according to claim 1, wherein the receiving, via the i-th child node, the first public packet and adding the first node data to the first public packet comprises:
receiving, via the i-th child node, the first public packet, parsing whether the first public packet further comprises an idle portion, and adding, in response to the first public packet comprising the idle portion, the first node data to the first public packet.

13. The method according to claim 2, wherein when the termination node is the head node, the method further comprises:
parsing, via the head node, the first public packet to determine whether a target node of the first node data in the first public packet is the head node.

14. The method according to claim 13, wherein
the head node obtains, in response to the target node of the first node data being the head node, the first node data in the first public packet; and
the head node initiates, in response to the target node of the first node data not being the head node, transmission of a first node packet comprising the first node data in a transmission direction of the first node packet same as or different from a transmission direction of the first public packet.

15. The method according to claim 13, wherein the first node data comprises first addressing information for indicating the target node of the first node data.

16. The method according to claim 1, wherein the first node data is generated by the i-th child node or generated by a peripheral device connected to the i-th child node.

17. A method for transmitting data in a network comprising a head node and N child nodes, where N is an integer greater than 1, the method comprising:
initiating, via a start node, transmission of a first node packet comprising a first packet header;
receiving, via an i-th child node, the first node packet transmitted sequentially in the network, and adding first node data to the first node packet; and
receiving, via a termination node, the first node packet transmitted sequentially through the N child nodes in the network, wherein the first node packet comprises the first packet header and the first node data; or alternatively, receiving, via the head node after a k-th child node receives the first node packet transmitted sequentially in the network and obtains the first node data in the first node packet, the first node packet transmitted sequentially through the N child nodes in the network, wherein the first node packet comprises the first packet header, and i is less than k in a transmission sequence.

18. The method according to claim 1, whereinboth the start node and the termination node are the head node, or the start node is the head node and the termination node is a last child node among the plurality of child nodes, or the start node is the last child node among the plurality of child nodes and the termination node is the head node.

19. The method according to claim 17, wherein the network further comprises a branch child node of the i-th child node, and while the i-th child node receives the first node packet and adds the first node data to the first node packet, the method further comprises:sending, via the i-th child node, the first node packet to the branch child node of the i-th child node, wherein the branch child node of the i-th child node is only connected to the i-th child node.

20. The method according to claim 17, wherein the network further comprises a branch child node of the i-th child node, and prior to the receiving, via the i-th child node, the first node packet and adding the first node data to the first node packet, the method further comprises: sending, via the branch child node of the i-th child node, the first node data to the i-th child node, wherein the branch child node of the i-th child node is only connected to the i-th child node, and the first node data is generated by the branch child node of the i-th child node or a peripheral device connected to the branch child node of the i-th child node.

21. The method according to claim 17, wherein the first node data comprises first public data, the first node packet further comprises a public data field, and the receiving, via the i-th child node, the first node packet and adding the first node data to the first node packet comprises: receiving, via the i-th child node, the first node packet, and adding the first public data to the public data field in the first node packet.

22. The method according to claim 17, wherein the method further comprises:
segmenting, via the start node, the first node packet into one or more idle fields of equal length.

23. The method according to claim 17, whereinthe start node initiates transmission of the first node packet in a first direction, the first node packet further comprises first target data, and the method further comprises:
receiving, via a j-th child node in response to a target node of the first target data being the j-th child node, the first node packet transmitted sequentially in the network and obtaining the first target data in the first node packet; or
receiving, via the j-th child node in response to the target node of the first target data being a branch child node of the j-th child node, the first node packet transmitted sequentially in the network, sending the first node packet to a branch child node of the j-th child node, receiving the first node packet via the branch child node of the j-th child node, and obtaining the first target data in the first node packet.

24. The method according to claim 23, wherein the method further comprises:
marking, via the j-th child node, a field corresponding to the first target data as an idle field.

25. The method according to claim 17, wherein the receiving, via the k-th child node, the first node packet transmitted sequentially in the network and obtaining the first node data in the first node packet comprises:
receiving, via the k-th child node, the first node packet transmitted sequentially in the network, obtaining the first node data in the first node packet, and marking a field corresponding to the first node data as an idle field.

26. The method according to claim 22, 24, or 25, whereinthe receiving, via the i-th child node, the first node packet transmitted sequentially in the network and adding the first node data to the first node packet comprises:receiving, via the i-th child node, the first node packet transmitted sequentially in the network, and adding the first node data to the idle field in the first node packet.

27. The method according to claim 25, wherein the first node data comprises first non-public data and/or first public data, the i-th child node receives the first node packet transmitted sequentially in the network and adds the first non-public data to the idle field in the first node packet, and/or the first node packet further comprises a public data field, and the i-th child node receives the first node packet transmitted sequentially in the network and adds the first public data to the public data field.

28. The method according to claim 27, wherein the first public data comprises at least one of audio data or broadcast data, and the first non-public data comprises at least one of configuration data, read data, interrupt data, control data, command data, radar data, video data, image data, sensing data, and vehicle management data.

29. The method according to claim 26, wherein the method further comprises:
segmenting, via the i-th child node, the first node data, so that the first node data comprises at least two segments of the first node data; and
adding, via the i-th child node, the at least two segments of the first node data to a plurality of the idle fields in the first node packet respectively.

30. The method according to claim 26, wherein the method further comprises:
segmenting, via the i-th child node, the first node data, so that the first node data comprises at least two segments of the first node data; and
adding, via the i-th child node, a first portion of each of the at least two segments of the first node data to the idle field in the first node packet respectively.

31. The method according to claim 30, wherein the method further comprises:
initiating, via the start node, transmission of a second node packet comprising a second packet header;
receiving, via the i-th child node, the second node packet transmitted sequentially in the network, wherein the second node packet comprises an idle field of the second node packet, adding, via the i-th child node, a second portion of the at least two segments of the first node data to the idle field of the second node packet; and
receiving, via the termination node, the first node packet and the second node packet, and combining the first portion of the at least two segments of the first node data and the second portion of the at least two segments of the first node data into the first node data.

32. The method according to claim 17, wherein the receiving, via the i-th child node, the first node packet and adding the first node data to the first node packet comprises:
receiving, via the i-th child node, the first node packet, parsing whether the first node packet further comprises an idle portion, and adding, in response to the first node packet further comprising the idle portion, the first node data to the first node packet;or
receiving, via the i-th child node in response to the first node data comprising first non-public data, the first node packet, parsing whether the first node packet further comprises an idle portion, and adding, in response to the first node packet comprising the idle portion, the first non-public data to the first node packet.

33. The method according to claim 18, wherein when both the start node and the termination node are the head node, the method further comprises:
parsing, via the head node, the first node packet, to determine whether a target node of the first node data in the first node packet is the head node.

34. The method according to claim 33, wherein
the head node obtains, in response to the target node of the first node data being the head node, the first node data in the first node packet; and
the head node initiates, in response to the target node of the first node data not being the head node, transmission of a third node packet comprising the first node data in a transmission direction of the third node packet same as or different from a transmission direction of the first node packet.

35. The method according to claim 23, wherein
the first target data comprises first addressing information for indicating the target node of the first target data.

36. The method according to claim 17, wherein the first node data is generated by the i-th child node or generated by a peripheral device connected to the i-th child node.

37. The method according to claim 18, wherein when the start node is the last child node, the termination node is the head node, the network comprises a first link and a second link, and the head node connects the first link to the second link, the method further comprises:
parsing, via the head node, the first node packet, to determine whether a target node of the first node data in the first node packet is the head node, wherein the first node packet is transmitted to the head node through the first link; and
initiating, via the head node in response to the target node of the first node data in the first node packet not being the head node, transmission of a fourth node packet in the second link, wherein the fourth node packet comprises the first node data.

38. A chip, comprising:
a processor and a memory, wherein the memory is configured to store a computer program, and the processor is configured to invoke and run the computer program stored in the memory, to implement the method according to any one of claims 1-37.

39. A communication system, comprising:
the chip according to claim 38 and a peripheral device connected to and communicating with the chip.
